# EUROPEAN PATENT SPECIFICATION

(11) **EP 3 392 862 B1**
(45) Date of publication and mention of the grant of the patent: **21.06.2023**
(21) Application number: 17382210.7
(22) Date of filing: 20.04.2017
(51) Int. Cl.: G09B 23/28

(54) **MEDICAL SIMULATIONS**
MEDIZINISCHE SIMULATIONEN
SIMULATIONS MÉDICALES

(43) Date of publication of application: 24.10.2018
(73) Proprietor: Fundació Hospital Universitari Vall d'Hebron - Institut de Recerca, 08035 Barcelona (ES); Fundació Eurecat, 08290 Cerdanyola del Vallès (ES)
(72) Inventor: Serres Créixams, Xavier, 08035 BARCELONA (ES); Torrente Ortiz, Antonio Miguel, 08027 BARCELONA (ES); Fort Fernàndez, Santiago, 08195 SANT CUGAT DEL VALLÈS (ES); Adrover Nadal, Miquel Àngel, 07687 MANACOR (ES)
(74) Representative: ZBM Patents - Zea, Barlocci & Markvardsen

(56) References cited:
- EP-A1- 2 147 636
- WO-A1-2011/001299
- WO-A1-2013/150436
- WO-A1-2015/092628
- GB-A- 2 479 406
- US-A- 5 689 443
- US-A1- 2010 104 162
- US-A1- 2014 127 654
- US-A1- 2014 170 620

## Description

The present disclosure relates to methods and systems for training imaging-guided interventions.

### BACKGROUND

Ultrasonography is a diagnostic imaging technique that allows for real-time visualization of the human body. Using this technique, a needle may be used to puncture to perform biopsies of tumors, tumors ablations or drainages in a safe and minimally invasive manner.

Advanced skills are needed to perform such interventions in patients and consequently highly trained experience personnel are needed.

Thus, for example, the International Patent Application WO2011/001299 with title *"Tumor ablation training system"* relates to medical training systems (more particularly to guided interventional devices) including a subject phantom capable of being visualized on a display. A spatial tracking system is configured to track an interventional instrument in subject phantom space. A simulation system is configured to generate a simulated abnormality in the phantom space and to simulate interactions with the simulated abnormality to provide feedback and evaluation information to a user for training the user in an associated procedure related to the abnormality.

Basically, a system disclosed in this document requires a real scanner (e.g. ultrasonic scanner, a CT scanner, MRI scanner, etc.); a needle; a tissue-mimicking phantom (i.e. the phantom space comprises internal organs of a subject), compatible with ultrasound, CT imaging or other imaging; and software running on a workstation. The software is configured to acquire, process and display images from an ultrasound scanner in real-time, create and visualize in real-time virtual tumors in ultrasound images, and spatially track positions of the ultrasound probe and the needle probe relative to the virtual tumors visualized jointly with the image such that a simulated ablation performed at a location of the needle probe is visually displayed to provide training feedback for a user.

However, a system as described in the document may have several drawbacks.

Firstly, the described subject phantoms (e.g. tissue-mimicking phantoms) are very difficult to manufacture and, consequently, very expensive. The cost of the system increases if the phantom must be compatible with ultrasound, CT imaging or other imaging. Furthermore, each phantom may represent a different part of a body and, depending on the part of the body on which each training is intended, more than one phantom may be required.

On the other hand, the system disclosed in the document requires superimposing in real-time a virtual tumor in a real image obtained by the scanner and this can become very difficult because each movement of the scanner on the phantom may generate a new real image and consequently the virtual tumor must be constantly repositioned according to new captured images. This way, the workstation on which the software runs requires important processing capabilities. This feature further increases the cost of said system.

Furthermore, the use of real scanners further increases the cost of the system because of the cost of the real scanner and its maintenance.

WO 2013/150436 discloses methods and devices for simulating ultrasound procedures and for training ultrasound users.

WO2011001299 describes a system and method including a subject phantom capable of being visualized on a display.

Consequently, there is a need for methods and systems that at least partially solves the aforementioned problems.

### SUMMARY

The present invention provides a method according to claim 1. Various embodiments are set out in the dependent claims.

The present invention further provides a control system according to claim 9. According to a first aspect, a method of training imaging-guided interventions by means of a control system having associated at least one screen and being connectable to a simulation system is provided. The simulation system may comprise a pad (for example, simulating a subject body or a part of it); an imaging scanner simulator comprising a first position sensor and being configured to be moved over the pad; a position tracking device configured to track the position and orientation of the imaging scanner simulator relative to the pad by locating the first position sensor. The method may comprise, during the training:
- generating at least one virtual organic tissue in any position within a virtual space corresponding to the physical space occupied by the pad
- for each movement of the imaging scanner simulator, receiving its position and orientation, said position and orientation being obtained by the tracking device from the location of the first position sensor when it is over or near the pad;
- for each received position and orientation of the imaging scanner simulator, obtaining a virtual section plane in the virtual space of the pad;
- generating a simulated image from the obtained virtual section plane, which comprises a section of at least one of the generated virtual organic tissue if the obtained virtual section plane cuts the virtual organic tissue in the virtual space;
- displaying the generated image on the screen.

This way, the imaging scanner simulator is not used for obtaining real images of inside of the pad but for obtaining a virtual section plane in the virtual space of the pad from the received position and orientation of the imaging scanner simulator. Its position and orientation are obtained by the tracking device from the location of the first position sensor comprised in the imaging scanner simulator. Consequently, non-presence of a real imaging scanner reduces both the cost of manufacturing and maintenance of the simulation system. In addition, the pad must not be compatible with ultrasound, CT imaging or other imaging techniques, which also reduces the cost of the simulation system.

On the other hand, the provision of the step of generating at least one virtual organic tissue in any position within a virtual space corresponding to the physical space occupied by the pad allows positioning virtual organic tissues (for example, tumors) within the virtual space based on a coordinates axes of said virtual space. Thus, it is possible to obtain a virtual section plane from the received position and orientation of the imaging scanner simulator and to determine if this plane cuts any of the generated virtual organic tissues positioned within the virtual space. Consequently, generating a simulated image from the obtained virtual section plane is possible, said simulated image comprising the cross-section of any virtual organic tissue cut by the plane.

The virtual organic tissues may be represented within the virtual space by means of, for example, geometrical shapes, 3D drawings of organs, volumetric ultrasound images, computer tomography images and/or magnetic resonance images.

Furthermore, a virtual organic tissue may be, for example, a virtual abnormal element representing a medical abnormality (it may require intervention or not) or a virtual model of an internal organ.

In some examples, the imaging scanner simulator may comprise a first identification element configured to identify the type of imaging scanner simulator comprised in the simulation system. The method may comprise receiving at least one control or data signal from the first identification element to identify the type of imaging scanner simulator comprised in the simulation system. The imaging scanner simulator may be of the type represented, for example, by a narrow linear transducer, a wide linear transducer, a convex transducer or an intracavitary transducer.

On the other hand, the pad may comprise a second identification element configured to identify the type of pad comprised in the simulation system. The method may comprise receiving at least one control or data signal from the second identification element to identify the type of pad comprised in the simulation system. For example, the pad may be a basic pad with, for example, a cubic shape or may simulate a subject body or a part of it. Among others, the pad may simulate a liver, a breast (it may be of different volumes and/or textures), an arm, etc.

From the first identification element associated to the imaging scanner simulator and the second identification element associated to the pad, the control system and/or the simulation system may generate warnings or like if the used imaging scanner simulator is not appropriate for the pad comprised in the simulation system or vice versa.

For generating the warnings, the control system and/or the simulation system may comprise a warning module, which may comprise at least one of the following sub-modules:
- a first sub-module comprising at least one warning element for generating an audible warning (e.g. a speaker, a buzzer, etc.);
- a second sub-module comprising at least one warning element for generating a visual warning (e.g. a display screen (for example, LCD), a plurality of LEDs (Light Emitting Diode), etc.);
- a third sub-module comprising at least one warning element for generating a haptic warning (e.g. a vibrator motor).

In some examples, the pad may comprise at least one second position sensor. The position tracking device may also be configured to track the position and orientation of the pad by locating the second position sensor. The method may comprise:
- for each movement of the pad, receiving its position and orientation, said position and orientation being obtained by the tracking device from the location of the second position sensor;
- for each received position and orientation of the pad and the received position and orientation of the imaging scanner simulator, obtaining a virtual section plane in the virtual space of the pad according to the movement of the pad;
- generating a simulated image from the obtained virtual section plane, which comprises a section of at least one of the generated virtual organic tissue if the obtained virtual section plane cuts the virtual organic tissue in the virtual space;
- displaying the generated image on the screen.

This way, the provision of the second position sensor (for example, inside the pad) allows obtaining a moveable pad, that is, any movement applied to the pad may be transferred to the coordinate axes of the virtual space corresponding to the physical space occupied by the pad and to the coordinates of the virtual organic tissues generated in any position within said virtual space.

Then, the method may comprise, for each received position and orientation of the pad, determining the movement in the virtual space of the generated at least one virtual organic tissue according to the received position and orientation of the pad.

In some examples, the training may comprise at least one of the following non-intrusive exercises:
- determining the number of virtual organic tissues generated in the virtual space of the pad;
- obtaining the simulated image comprising more virtual organic tissues generated in the virtual space;

- determining the largest virtual organic tissue generated in the virtual space;
- determining the smallest virtual organic tissue generated in the virtual space;
- determining the most echogenic/brightness/dense/signal intensity virtual organic tissue generated in the virtual space;
- determining the less echogenic/brightness/dense/signal intensity virtual organic tissue generated in the virtual space;
- determining the diameter/volume of at least one of the virtual organic tissues generated in the virtual space.

The method may further comprise:
- generating a virtual element associated to the imaging scanner simulator within the virtual space;
- for each received position and orientation of the imaging scanner simulator, obtaining a virtual section plane in the virtual space of the pad;
- generating a simulated image from the obtained virtual section plane, which comprises at least a section of the generated virtual element associated to the imaging scanner simulator if the obtained virtual section plane cuts the virtual element in the virtual space;
- displaying the generated image on the screen.

In some examples, a virtual organic tissue generated within the virtual space may be a tube or like and the virtual element associated to the imaging scanner simulator may be a ring or like with an interior surface larger than the cross-section of the tube or like. The training may comprise at least one of the following non-intrusive exercises:
- identifying an axial section plane of a first end of the tube or like and, by maintaining the cross-section of the tube or like inside the cross-section of the ring or like, following the tube or like along its longitudinal axis with the ring or like from the first end to the other end of the tube or like;
- identifying a sagittal section plane of a first end of the tube or like and, by maintaining the longitudinal section of the tube or like inside the longitudinal section of the ring or like, following the tube or like along its longitudinal axis with the ring or like from the first end to the other end of the tube or like;
- identifying a coronal section plane of a first end of the tube or like and, by maintaining the longitudinal section of the tube or like inside the longitudinal section of the ring or like, following the tube or like along its longitudinal axis with the ring or like from the first end to the other end of the tube or like.

At this point it is important to note that the tube or like (e.g. a bar) generated within the virtual space may be straight or may be curved or multi-curved.

According to some examples, at least two virtual organic tissues may be generated within the virtual space. Each generated virtual organic tissue may be a tube or like. The training may comprise a non-intrusive exercise for identifying the perpendicular plane to a theoretical plane joining the longitudinal axis of the two tubes or like, the perpendicular plane being parallel and equidistant to the tubes or like.

Furthermore, for performing intrusive exercises, the simulation system may comprise a needle. The needle may comprise a third position sensor. The needle may be configured to be inserted into the physical space of the pad. The position tracking device may also be configured to track the position and orientation of the needle relative to the pad by locating the third position sensor. The method may comprise, during the training:
- for each movement of the needle, receiving its position and orientation, said position and orientation being obtained by the tracking device from the location of the third position sensor when the needle is inserted into or over the physical space of the pad;
- for each received position and orientation of the needle, generating a virtual needle within the virtual space in a position and orientation according to said received position and orientation of the needle;
- from the last received position and orientation of the imaging scanner simulator, obtaining a virtual section plane in the virtual space of the pad;
- generating a simulated image from the obtained virtual section plane, which comprises a section of the virtual needle if the obtained virtual section plane cuts the virtual needle in the virtual space;
- displaying the generated image on the screen.

A first position sensor is arranged in the tip of the needle.

This way, the provision of the position sensor in the tip allows marking the trajectory of the needle tip inside the pad and this is important because the tip of the needle (more specifically, the tip of the virtual needle) is the one that interacts with the virtual organic tissues and with virtual obstacles arranged to make access difficult to the virtual organic tissues.

If the simulation system comprises a needle, the training may comprise an intrusive exercise for arranging the tip of the virtual needle as close as possible to the center of a virtual organic tissue generated in the virtual space, by inserting the needle into the physical space of the pad. This way, training for puncture techniques of tumors, vessels and/or nerves (represented by the virtual organic tissues generated within the virtual space) may be performed.

According to some examples, the needle may comprise a first element actionable by a user configured to generate a control or data signal to be considered during the training (or more specifically during the performance of an exercise comprised in the training). The method may comprise receiving at least one control or data signal generated by the first actionable element comprised in the needle when it is actuated by a user. Basically, said first actionable element may be used during the performance of the exercises. For example, the first actionable element may be used to actuate a biopsy needle, to trigger the ablation of a tumor, to trigger the ablation of a tumor by means of the moving-shot technique, to trigger the administration of anesthesia or to trigger the administration of serum glucose to perform hydro dissection.

Depending on the moment of the performance or execution of an exercise said first element may represent different functions, that is, along the performance of an exercise the first element actionable by a user may generate different control or data signals.

In some examples, the training may comprise an intrusive exercise for arranging the tip of the virtual needle as close as possible to the external surface of a virtual organic tissue, by inserting the needle into the physical space of the pad, and, after receiving at least one control or data signal generated by the first actionable element, simulating the capture of a part of tissue from the virtual organic tissue according to the position of the tip of the virtual needle. Thus, training to perform biopsies of tumors may be implemented.

In some examples, the training may comprise an intrusive exercise for, until a generated virtual organic tissue is filled, inserting the tip of the virtual needle beyond the virtual organic tissue, by inserting the needle into the physical space of the pad, and, for a received control or data signal generated by the first actionable element, simulating the automatic generation of a heat ball or like covering the entire volume of the virtual organic tissue so that the virtual organic tissue and the tissue around it may be virtually and totally ablated (i.e. a completed ablation) of the target virtual organic tissue. This way, training for tumors ablations techniques may be performed.

In some examples, the training may comprise an intrusive exercise for, until a generated virtual organic tissue is filled, inserting the tip of the virtual needle into the virtual organic tissue, by inserting the needle into the physical space of the pad (the virtual needle is always inserted into the virtual organic tissue during the performance of the exercise), and, maintaining the action over the first actionable element for a time, simulating the generation of a heat ball or like inside the virtual organic tissue. This way, a plurality of heat balls may be generated until covering the entire virtual organic tissue without crossing the surface of the virtual organic tissue. Thus, training for moving-shot techniques of ablation of tumors may be performed.

In any case, training may comprise one or more of the previously described exercises or others. In case of more than one exercise, the exercises may be executed according to a predetermined order (for example, according to the difficulty of the exercises) or may be executed in a randomly way.

Furthermore, progress in training may require a positive evaluation in the present exercise to move to the next exercise. Alternatively, each exercise may be performed but training is not completed until each exercise or most of them has a positive evaluation. Furthermore, each exercise may have different levels of difficulty.

On the other hand, a login of a user (for example, a teacher, an instructor or a student such as a radiologist or, in general, a medical professional) may be required. Login may be performed based on a user identification, biometric parameters, etc. This way, information relating to the performance of the exercises may be stored associated to the user (e.g. if the user is a student). Said information may be seen by the teacher or instructor, for example, for evaluating the performance of the exercises.

The needle comprises a second position sensor arranged at the other end of the needle or close to it. The position tracking device may also be configured to track the position and orientation of the other end of the needle relative to the pad by locating the second position sensor. The method may comprise, from each received position and orientation of the first position sensor of the needle and the corresponding received position and orientation of the second position sensor of the needle, determining how much the needle is deformed during its insertion in the physical space. In addition, it is also possible to obtain the position and orientation of the needle with more precision.

According to some examples, the second position sensor may be arranged in the handle of the needle. From this configuration, it is possible to determine if the first and the second position sensors are aligned or misaligned.

In some examples, the needle may comprise a third identification element configured to identify the type of needle comprised in the simulation system. The method may comprise receiving at least one control or data signal from the third identification element to identify the type of needle comprised in the simulation system. This way, the third identification element may represent different lengths of the needle, that is, for example, a needle of 5 cm, a needle of 7 cm, a needle of 15 cm or a needle of 20 cm.

Thus, from the combination between the first identification element, the second identification element and/or the third identification element, it is possible to generate warnings or like. Thus, a warning may be generated if the needle comprised in the simulation system is not appropriate for the pad present in the simulation system or if the needle is not appropriated for the imaging scanner simulator present in the simulation system. Basically, the object may be to determine incompatibilities between the needle, the pad and/or the imaging scanner simulator.

The method may further comprise applying a breathing movement during generating the simulated image from the obtained virtual section plane. The breathing movement may be based in at least one breathing profile. Basically, the simulation engine may have a parametric breath system controlling different inspiration and expiration patterns and the effect of these on the virtual organic tissues geometry. For example, a voice control will be able to temporarily stop/minimize the movement as with real patients. The axis of movement and compression will be configurable and related to the physical qualities of the virtual organic tissues considered.

In some examples, the method may further comprise receiving at least one control or data signal for starting/stopping the breathing movement applied during generating the simulated image from the obtained virtual section plane. The control or data signal for starting/stopping the breathing movement may be received, for example, from at least one of a pedal, a microphone (e.g. by means of a voice control), a remote, a mouse or a keyboard.

The method may comprise, during the performance of each exercise of the training, recording the generated simulated images or any other type of images obtained from the simulated images.

Furthermore, the method may comprise, during the performance of each exercise of the training, obtaining data relating to the performance of each exercise.

According to some examples, the method may also comprise recording obtained data relating to the performance of each exercise comprised in the training.

In some examples, the method may comprise evaluating each exercise of the training from obtained data relating to the performance of the exercise.

In some examples, the position tracking device may comprise at least one of an optical tracking device or an electromagnetic tracking device. Alternatively or complementarily, the position tracking device may comprise optical sensors and/or inertial sensors (i.e. measures of acceleration and angular velocity may be performed by means of, for example, accelerometers, gyroscopes and/or magnetometers).

In case of an electromagnetic tracking device, the device may comprise a magnetic field emitter and each position sensor may comprise an electromagnetic positioning sensor.

In another aspect, a computer program is provided. The computer program may comprise program instructions for causing a control system to perform a method as described above of training imaging-guided interventions. The computer program may be embodied on a storage medium (for example, a CD-ROM, a DVD, a USB drive, on a computer memory or on a read-only memory) or carried on a carrier signal (for example, on an electrical or optical carrier signal).

According to yet another aspect, a control system for training imaging-guided interventions is provided. The control system may have associated at least one screen and may be connectable to a simulation system. The simulation system may comprise a pad (for example, a pad simulating a subject body or a part of it); an imaging scanner simulator comprising a first position sensor and being configured to be moved over the pad; a position tracking device configured to track the position and orientation of the imaging scanner simulator relative to the pad by locating the first position sensor. The control system may comprise:
- means for generating at least one virtual organic tissue in any position within a virtual space corresponding to the physical space occupied by the pad;
- means for receiving its position and orientation, said position and orientation being obtained by the tracking device from the location of the first position sensor when it is over or near the pad;
- means for obtaining a virtual section plane in the virtual space of the pad;
- means for generating a simulated image from the obtained virtual section plane, which comprises a section of at least one of the generated virtual organic tissue if the obtained virtual section plane cuts the virtual organic tissue in the virtual space;
- means for displaying the generated image on the screen.

In another aspect, a control system is provided. The control system may comprise:
- a communication module configured to connect the control system to a simulation system, the simulation system comprising:
   ∘ a pad (for example, simulating a subject body or a part of it);
   ∘ an imaging scanner simulator comprising a first position sensor and being configured to be moved over the pad;
   ∘ a position tracking device configured to track the position and orientation of the imaging scanner simulator relative to the pad by locating the first position sensor;
- a module configured to associate the control module to at least one screen;
- a memory and a processor, embodying instructions stored in the memory and executable by the processor, the instructions comprising functionality to execute a method as described above of training imaging-guided interventions.

Additional objects, advantages and features of embodiments of the invention will become apparent to those skilled in the art upon examination of the description within the scope of the appended claims.

### BRIEF DESCRIPTION OF THE DRAWINGS

Non-limiting examples of the present disclosure will be described in the following, with reference to the appended drawings, in which:
Figure 1 shows a schematic diagram of a control system connected to a simulation system and having associated a screen, according to some examples;
Figure 2 shows a schematic diagram of a simulated image generated in a method of training imaging-guided interventions, according to some examples;
Figure 3 shows a schematic diagram of a control system connected to a simulation system executing a first non-intrusive exercise of training;
Figure 4 shows a schematic diagram of a control system connected to a simulation system executing a second non-intrusive exercise of training;
Figure 5 shows a schematic diagram of a control system connected to a simulation system executing a third non-intrusive exercise of training;
Figure 6 shows a schematic diagram of a control system connected to a simulation system executing a fourth non-intrusive exercise of training;
Figure 7 shows a schematic diagram of a control system connected to a simulation system executing a fifth non-intrusive exercise of training;
Figure 8 shows a schematic diagram of a control system connected to a simulation system executing a sixth non-intrusive exercise of training;
Figure 9 shows a schematic diagram of a simulation system executing a first intrusive exercise of training (Punctures);
Figure 10 shows a schematic diagram of a simulation system executing a second intrusive exercise of training (Biopsies);
Figure 11 shows a schematic diagram of a simulation system executing a third intrusive exercise of training (Ablations);
Figure 12 shows a schematic diagram of a simulation system executing a fourth intrusive exercise of training (Moving-shot techniques).

### DETAILED DESCRIPTION OF EXAMPLES

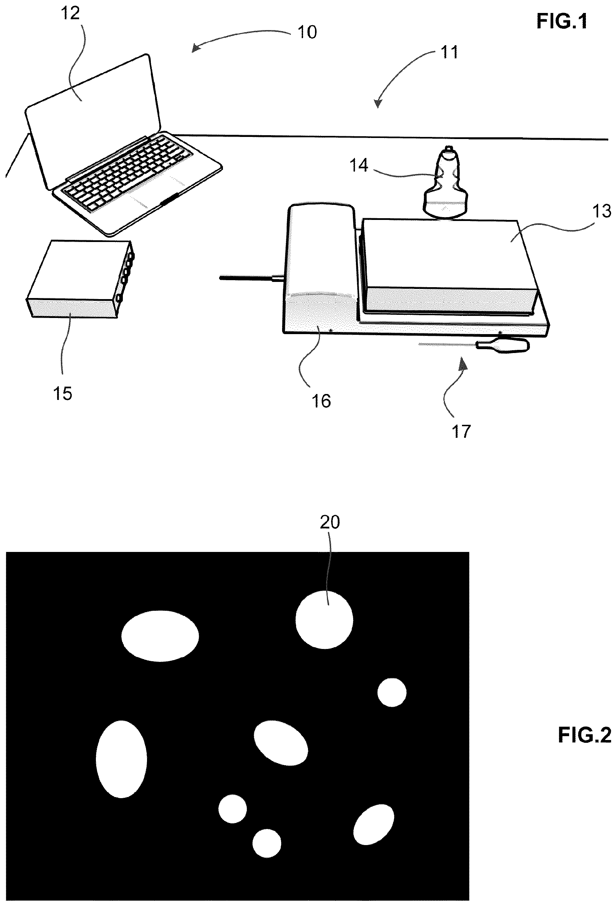

In Figure 1, a control system 10 is shown. The control system 10 may comprise or may be implemented by electronic means, computing means or a combination of them, that is, said electronic or computing means may be used interchangeably so that a part of the described means may be electronic means and the other part may be computing means, or all described means may be electronic means or all described means may be computing means.

Examples of a control system 10 comprising only electronic means (that is, a purely electronic configuration) may be a programmable electronic device such as a CPLD (Complex Programmable Logic Device), an FPGA (Field Programmable Gate Array) or an ASIC (Application-Specific Integrated Circuit).

Examples of a control system 10 comprising only computing means may be a computer system, which may comprise a memory and a processor, the memory being adapted to store a set of computer program instructions, and the processor being adapted to execute these instructions stored in the memory in order to generate the various events and actions for which the control system has been programmed.

The computer program may comprise program instructions for causing the control system 10 to perform a method of training imaging-guided interventions that will be described later. The computer program may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the method. The carrier may be any entity or device capable of carrying the computer program.

For example, the carrier may comprise a storage medium (it may be the storage medium of the control system 10 itself or an external storage medium connectable to the control system), such as a ROM, for example a CD ROM or a semiconductor ROM; a magnetic recording medium, for example a hard disk; a solid-state disk (SSD); a USB flash drive (for example, a pen drive); or a non-volatile memory card such as a SD, miniSD or microSD card. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

In addition, the control system 10 may also have a hybrid configuration between computing and electronic means. In this case, the system may comprise a memory and a processor to implement computationally part of its functionalities and certain electronic circuits to implement the remaining functionalities.

On the other hand, the control system 10 may comprise one or more sub-systems, each of which may perform a part of the events and actions for which the control system as a whole has been programmed. If the sub-systems are close enough, they may be wired (for example, through Ethernet technology) or may be connected through short-range communication technologies, for example, Bluetooth (e.g. BLE - Bluetooth Low Energy), NFC, Zigbee or WiFi technology. If the sub-systems are far away, they may be connected through long-range wireless communication technologies such as GSM, GPRS, 3G, 4G or satellite technology or wired technologies (for example, through optical fiber, ADSL, etc.).

Furthermore, the control system 10 may comprise a communication module for its connection to a simulation system 11 that will be described below.

The control system 10 may also have associated a screen 12 so that the screen may be near to the control system 10 (e.g. the screen may be comprised in the control system or may be wired connected to the control system) and/or may be arranged remote.

In the present examples, the control system is a computing system 10, such as a laptop or a desktop computer.

At this point it is important to note that a login of a user (for example, a teacher, an instructor or a student such as a radiologist or, in general, a medical professional) in the control system may be required. Login may be performed based on a user identification and a password, biometric parameters, etc. This way, information relating to the performance of the exercises may be stored in, for example, a repository (e.g. a database), associated to each user (e.g. if the user is a student). Said information may be seen by the teacher or instructor for evaluating the performance of the exercises.

On the other hand, the control system may comprise a Learning Management System (LMS) through which the instructor or teacher may deliver material to the students (e.g. online videos for helping to perform the exercises), track student progress, and manage record-keeping.

In addition, the control system may have associated a camera for recording or capturing images relating to the performance of an exercise. This way, the teacher or instructor may evaluate the student taking into account the recorded images or may help or rectify the student during the performance of an exercise if the teacher or instructor is receiving images in real time. Furthermore, the student may see the recorded or captured images after the performance of an exercise for improving his/her skills.

With reference to the simulation system 11, it may comprise:
- a pad 13;
- an imaging scanner simulator 14;
- a position tracking device 15.

In addition, the simulation system 11 may comprise a communication module for connecting all or some elements (e.g. the pad, the imaging scanner simulator and/or the position tracking device) to the control system 10.

The pad 13 may be a homogeneous matrix (for example, with a cubic shape) that may be covered with a durable and opaque membrane. The pad may be adjusted (or not) in a box 16 (for example a rigid box) or similar (for example, a housing). The pad may simulate a subject body or a part of it. Among others, the pad may simulate a liver, a breast (it may be of different volumes and/or textures), an arm, testicles, a neck, a leg, an abdomen, a brain, etc. The pad 13 may be an anthropomorphic pad or a basic pad. This way, the pad may comprise internally elements simulating bones, veins, arteries, muscles, etc.

Furthermore, the pad 13 may comprise an identification element configured to identify the type of pad (i.e. a liver, a breast (volume and/or texture), testicles, etc.) comprised in the simulation system 11. For example, said identification element may be a RFID tag containing electronically stored information relating to the type of the pad. The RFID tag may be affixed to the pad or arranged inside it. The identification element may also be mechanical, pneumatic or any other solution that allows identifying the type of pad used in the simulation system 11. Consequently, the pad may be interchangeable according to the exercise of the training to be performed.

In any case, the type of pad 13 must be provided to the control system 10. This way, the pad may be wireless (for example, in case the identification element is a RFID tag, the control system may comprise a RFID reader) or wired connected (for example, through the communication module of the simulation system 11) to the control system.

Depending on the received type of pad 13, the control system 10 may generate a virtual space corresponding to the physical space occupied by the pad. This way, the control system may generate at least one virtual organic tissue in any position within the generated virtual space for training as will be described later.

On the other hand, the pad 13 may comprises at least one position sensor (for example, it may be arranged inside the pad or affixed to it) to be tracked (e.g. its position and orientation) by the position tracking device 15. Said position sensor may allow the pad to be movable, that is, any movement applied to the pad may be transferred to the coordinate axes of the virtual space corresponding to the physical space occupied by the pad and to the coordinates of the virtual organic tissues generated in any position within said virtual space. Consequently, the position tracking device may also be configured to track the position and orientation of the pad by locating its corresponding position sensor.

Normally, pads known in the state of the art are static so that the coordinates on which the virtual organic tissues (e.g. tumors, obstacles, etc.) are located are also static. This way, in some examples, the presence of the pad position sensor allows transferring the movements of the pad to the coordinates that have allowed to define the virtual space corresponding to the physical space occupied by the pad. Furthermore, the virtual organic tissues generated in the virtual space may be repositioned within it.

The box or housing 16 in which the pad 13 may be arranged may also contain a space where all electronic parts may be installed, for example, a magnetic field emitter (for example, in case the position tracking device is an electromagnetic device), the position tracking device 14 itself, a warning module and/or a communication module (for example, the communication module previously disclosed configured to connect the simulation system 11 to the control system 10 or vice versa).

The warning module may comprise at least one of the following sub-modules:
- a first sub-module comprising at least one warning element for generating an audible warning (e.g. a speaker, a buzzer, etc.);
- a second sub-module comprising at least one warning element for generating a visual warning (e.g. a display screen (for example, LCD), a plurality of LEDs (Light Emitting Diode), etc.);
- a third sub-module comprising at least one warning element for generating a haptic warning (e.g. a vibrator motor).

Thus, for example, a warning may be generated (e.g. by the control system 10 or the simulation system 11 itself) if the type of the imaging scanner simulator 14 is not appropriate for the pad 13 comprised in the simulation system 11 or vice versa.

In addition or alternatively to the warning, the system may prevent the start of a training exercise until the pad 13 and/or the imaging scanner simulator 14 are the right ones.

The communication module may be or not in the simulation system and may have different configurations according to the elements (e.g. the pad 13, the imaging scanner simulator 14 or the position tracking device 15) comprised in the simulation system. This way, all or part of the elements may be directly connected to the control system 10 (for example, by means of a wired or wireless connection) or may be connected through the disclosed communication module.

In any case, the connection between the control system 10 and the different elements of the simulation system 11 may be wired or wireless.

In case of a wired connection, in some examples, the simulation system 11 (e.g. all or a part of its elements) and the control system 10 may comprise a wired communication module (for the simulation system, it may be the communication module described above) based on, for example, a serial port, such as USB, micro USB, mini USB, Firewire or Ethernet.

In case of a wireless connection, in some examples, the simulation system 11 (e.g. all or a part of its elements) and the control system 10 may comprise a short-range communication module (for the simulation system, it may be the communication module described above) based on, for example, Bluetooth (e.g. BLE - Bluetooth 4.0 Low Energy), NFC, Zigbee or WiFi technology. Clearly, the communication module of the control system and the communication module of the simulation system must be compatible to establish the communication between both systems.

Alternatively or complementarily, the simulation system 11 (e.g. all or a part of its elements) and the control system 10 may comprise a long-range communication module (for the simulation system, it may be the communication module described above) based on, for example, GSM, GPRS, 3G, 4G or satellite technology. These communication modules may also be based on optical fiber, ADSL, etc. In any case, the simulation system and the control system may be remote from each other.

More specifically, in the present examples, the control system 10 and the simulation system 11 are interconnected through wired communication modules based on, for example, an USB protocol.

In addition, the communication between the control system 10 and the simulation system 11 (or all or a part of its elements) may be secured by means of, for example, cryptographic keys and/or an SSL tunnel established between them.

In summary, all, none or a part of the elements (that is, for example, the pad 13, the imaging scanner simulator 14 or the position tracking device 15) comprised in the simulation system 11 may be directly connected to the control system 10. The elements not directly connected to the control system may be connected to the control system through a communication module comprised in the simulation system.

With respect to the imaging scanner simulator 14, the object is to simulate a real ultrasound transducer or like.

The imaging scanner simulator 14 may comprise an identification element configured to identify the type of imaging scanner simulator connected or comprised in the simulation system 11. The imaging scanner simulator may be of the type represented, for example, by a narrow linear transducer, a wide linear transducer, a convex transducer or an intracavitary transducer. Consequently, the imaging scanner simulator may be interchangeable according to the exercise of the training to be performed.

Said identification element may be, for example, a RFID tag containing electronically stored information relating to the type of simulated transducer. The RFID tag may be affixed to the imaging scanner simulator or arranged inside it. The identification element may also be mechanical, pneumatic or any other solution that allows identifying the type of imaging scanner simulator used in the simulation system. In any case, the control system 10 must receive the type of the imaging scanner simulator 13 used in the simulation system 11.

Furthermore, the imaging scanner simulator 14 may comprises at least one position sensor (for example, it may be arranged inside the imaging scanner simulator or affixed to it) to be tracked (e.g. its position and orientation) by the position tracking device 15, that is, the position tracking device may also be configured to track the position and orientation of the imaging scanner simulator by locating its corresponding position sensor.

Consequently, the position tracking device 15 may be also configured to position the imaging scanner simulator 14 within the coordinate frame and coordinate movements with onscreen simulated images representing a section plane of the virtual space corresponding to the physical space occupied by the pad 13.

For example, the position tracking device 15 may be an electromagnetic tracking device such as a 3D Guidance trakSTAR 3D electromagnetic tracking device (of the Northern Digital Inc. company). This device may be used for 3D tracking of markers with no line-of-sight requirements and providing high accuracy position and orientation tracking technology.

Basically, the trakSTAR device has an accuracy of 1.4 mm RMS, 0.5 degrees RMS and supports up to four sensors 6DoF (6 Degrees Of Freedom) for device, up to 16 in total (i.e. four devices). Its default update rate is 80 Hz but it is user-configurable from 20-255 Hz. Furthermore, the device comprises USB and RS-232 ports. This way, the device may be connected to the control system 10 by means of any of these ports. For example, the connection to the control system 10 may be performed through the USB port in the present examples. Each of the sensors are connected to the trakSTAR through wired connections.

The trakSTAR device works in conjunction with a transmitter (i.e. the magnetic field emitter previously disclosed) that establishes the coordinate frame and tracking volume. Said transmitter may be:
- Mid-Range Transmitter (MRT): provides a larger tracking volume (with a maximum tracking distance of 660 mm (for the model 800 sensor (it will be described below); on positive X-axis));
- Short-Range Transmitter (SRT): provides a smaller volume for targeted tracking (with a maximum tracking distance of 410 mm (for the model 800 sensor; on positive X-axis));
- Wide-Range Transmitter (WRT): provides a tracking volume up to 7 feet (2 meters).

The magnetic field emitter may be arranged, for example, inside the box 16 comprised in the simulation system 11. A Mid-Range Transmitter may be used in the present examples.

At least one sensor (a position sensor as described above) may be embedded into the imaging scanner simulator 14 and into the pad 13, which tracks (it allows sensor position and orientation data) its movements in all six degrees of freedom (6DoF), with no line of sight requirements. Every movement within the tracking volume is tracked in real time.

With reference to said 6DoF sensors, they come in a variety of sizes including the general-purpose reference sensor that consists of an 8 mm square cross-section down to 0.56 mm diameter cylindrical sensor for use in the smallest tools. More specifically, it may be used the sensor model 55 (Sensor OD = 0.56 mm Max; Cable OD = 3.8 mm; Sensor Length = 300 mm; Cable length = 2.2 m), the sensor model 90 (Sensor OD = 0.9 mm; Cable OD = 0.6 mm; Sensor Length = 7.25 mm; Cable length = 3.3 m), the sensor model 130 (Sensor OD = 1.5 mm; Cable OD = 1.2 mm; Sensor Length = 7.7 mm; Cable length = 3.3 m), the sensor model 180 (Sensor OD = 2.0 mm; Cable OD = 1.2 mm; Sensor Length = 9.9 mm; Cable length = 3.3 m) or the sensor model 800 (Sensor OD = 7.9 mm; Cable OD = 3.8 mm; Sensor Length = 19.8 mm; Cable length = 3.3 m).

Consequently, if the position tracking device 15 is a trakSTAR device as described above, the position sensor of the imaging scanner simulator 14 and of the pad 13 may be any of the 6DoF sensors previously described (e.g. a sensor model 90).

In case of using an electromagnetic position tracking device, if the identification element is a RFID tag or any other electromagnetic element, probably said identification element may require protection for avoiding problems with, for example, the data stored in the identification element.

Alternatively, the position tracking device 15 may have an optical configuration, that is, it may be an optical tracking device. For example, the position tracking device 15 may be a Polaris Optical Tracking System (for example, a Polaris Spectra or a Polaris Vicra system), which tracks the 3D position and orientation of active or passive markers attached to surgical tools (for example, the pad 13 and/or the imaging scanner simulator 14).

Because the sensors may be wired or wireless connected to the position tracking device 15, a wired or a wireless connection between the pad 13 (if it comprises a position sensor) and the position tracking device may be required to obtain the position an orientation of the pad. In the same way, a wired or a wireless connection between the imaging scanner simulator 14 and the position tracking device may also be required to obtain the position and orientation of the imaging scanner simulator. The obtained position and orientation of the pad and/or the imaging scanner simulator 13 may be sent from the position tracking device to the control system 10. Alternatively or complementarily, the position tracking device may comprise optical sensors and/or inertial sensors (i.e. measures of acceleration and angular velocity may be performed by means of, for example, accelerometers, gyroscopes and/or magnetometers).

The simulation system comprises a needle 17 configured to be inserted into the physical space of the pad 13. All the features described for the pad 13 and/or for the imaging scanner simulator 14 may be applied to the needle. The needle may allow performing intrusive exercises during the training.

The needle 17 may comprise an identification element configured to identify the type of needle connected or comprised in the simulation system 11. The needle may be of the type represented, for example, by different lengths, that is, for example, a needle of 5 cm, a needle of 7 cm, a needle of 15 cm or a needle of 20 cm. Consequently, the needle may be interchangeable in the simulation system according to the exercise of the training to be performed.

Said identification element may be, for example, a RFID tag containing electronically stored information relating to the type of needle 17. The RFID tag may be affixed to or arranged, for example, inside its handle. The identification element may also be mechanical, pneumatic or any other solution that allows identifying the type of needle used in the simulation system 11. In any case, the control system 10 must receive the type of the needle used in the simulation system.

This way, from the combination between the identification element of the pad 13, the identification element of the imaging scanner simulator 14 and/or the identification element of the needle 17, the control system 10 may generate warnings or like through the warning module previously disclosed comprised in the simulation system 11 and/or a warning module comprised in the control system 10. Thus, for example, a warning may be generated if the needle comprised in the simulation system is not appropriate for the pad present in the simulation system and/or if the needle is not appropriated for the imaging scanner simulator present in the simulation system. Basically, the object may be to determine incompatibilities between the needle, the pad and/or the imaging scanner simulator. For example, depending on the exercise of the training to be executed, an anthropomorphic pad of an abdominal region may require a needle of 10 or 15 cm and a convex transducer. In case this combination is not present in the simulation system 11, the control system 10 may generate a warning and/or may avoid the execution of the exercise until the configuration of the simulation system is adequate.

On the other hand, the needle 17 comprises at least one position sensor (for example, it may be arranged in the tip of the needle) to be tracked (e.g. its position and orientation) by the position tracking device 15, that is, the position tracking device is configured to track the position and orientation of the needle by locating its corresponding position sensor.

Consequently, the position tracking device 15 may be also configured to position the needle 17 within the coordinate frame and coordinate movements with onscreen simulated images representing the section plane of the virtual space corresponding to the physical space occupied by the pad 13.

The needle 17 also comprises another position sensor arranged at the other end of the needle, close to it or in its handle. The position tracking device 15 may also be configured to track the position and orientation of the other end of the needle relative to the pad 13 by locating said another position sensor. From this configuration, it is possible to determine if the two position sensors of the needle are aligned or misaligned and, consequently, it is possible to determine how much the needle is deformed during its insertion in the physical space of the pad. In addition, it is also possible to obtain the position and orientation of the needle with more precision.

Furthermore, the needle 17 may comprise an element (for example, a button or similar) actionable by a user. The element may be configured to generate a control or data signal to be considered by the control system 10 during the performance of an exercise during the training as will be described later.

Alternatively or complementarily to the element comprised in the needle 17, said control or data signal to be considered by the control system 10 during the performance of an exercise may be generated by a pedal, a microphone, a mouse, a keyboard, etc. or any other element actionable by a user.

Following, several methods involving the use of the previously described control system 10 will be disclosed.

Basically, the control system 10 may be configured to execute a method of training imaging-guided interventions. The control system may have associated at least one screen 12 (that is, the screen may be connected to the control system, the screen may be a part of the control system (for example, if the control system is a laptop) and/or the screen may be arranged remote from the system) and may be connectable to a simulation system 11 as previously described.

As described above, the simulation system 11 comprises:
- a pad 13;
- an imaging scanner simulator 14 comprising a first position sensor and being configured to be moved over the pad;
- a position tracking device 15 configured to track the position and orientation of the imaging scanner simulator relative to the pad by locating the first position sensor.

The method executed by the control system 10 may comprise, during the training:
- generating at least one virtual organic tissue (for example, a virtual abnormal element representing a medical abnormality (it may require intervention) and/or a virtual model of an organ) in any position within a virtual space corresponding to the physical space occupied by the pad 13 (the generated virtual space may be different depending on the type of the pad received by the control system);
- for each movement of the imaging scanner simulator 14, receiving its position and orientation, said position and orientation being obtained by the position tracking device 15 from the location of the first position sensor when it is over or near the pad;
- for each received position and orientation of the imaging scanner simulator, obtaining a virtual section plane in the virtual space of the pad;
- generating a simulated image from the obtained virtual section plane, which comprises a section (for example, a cross-section) of at least one of the generated virtual organic tissue if the obtained virtual section plane cuts the virtual organic tissue in the virtual space;
- displaying the generated image on the screen 12.

Figure 2 shows an example of a generated image. As may be seen in Figure 2, the image comprises a cross-section of a plurality of virtual organic tissues 20. At this point it is important to note that a virtual organic tissue may be represented, for example, by a geometrical shape, a 3D drawing of an organ, a volumetric ultrasound image, a volumetric computer tomography image or a volumetric magnetic resonance image.

On the other hand, the control system 10 may be configured to receive at least one control or data signal from the first identification element to identify the type of imaging scanner simulator 14 comprised in the simulation system 11.

Furthermore, the control system 10 is configured to receive at least one control or data signal from the second identification element to identify the type of pad 13 comprised in the simulation system 11.

If a needle is required, the control system 10 may also be configured to receive at least one control or data signal from the third identification element to identify the type of needle 17 comprised in the simulation system 11.

This way, from the control or data signals received from different identification elements, the control system 10 may determine if the exercise or a set of exercises to be performed during the training may be executed.

In addition, if the needle 17 further comprises a second position sensor arranged at the other end of the needle, close to it or in its handle, the method executed by the control system may comprise, from each received position and orientation of said the first position sensor and the second position sensor of the needle, determining how much the needle is deformed during its insertion in the physical space.

On the other hand, if the pad 13 comprises a position sensor as previously disclosed, then the method executed by the control system 10 may comprise the following:
- for each movement of the pad, receiving its position and orientation, said position and orientation being obtained by the position tracking device 15 from the location of the second position sensor;
- for each received position and orientation of the pad and the received position and orientation of the imaging scanner simulator 14, obtaining a virtual section plane in the virtual space of the pad according to the movement of the pad;
- generating a simulated image from the obtained virtual section plane, which comprises a section of at least one of the generated virtual organic tissue if the obtained virtual section plane cuts the virtual organic tissue in the virtual space;
- displaying the generated image on the screen 12.

Furthermore, the method executed by the control system 10 may comprise, for each received position and orientation of the pad 13, determining the movement in the virtual space of the generated at least one virtual organic tissue according to the received position and orientation of the pad.

This way, the movement of the pad may involve the movement of the virtual organic tissues generated within the virtual space. Then, this movement may be taken into account during the performance of the following disclosed exercises.

In addition, the method executed by the control system may comprise applying a breathing movement during generating the simulated image from the obtained virtual section plane. The breathing movement may be based on at least one breathing profile.

Thus, the method may also comprise receiving at least one control or data signal for starting/stopping the breathing movement applied during generating the simulated image from the obtained virtual section plane. Said control or data signal for starting/stopping the breathing movement may be received from at least one of a pedal; a microphone; a remote, a key of a keyboard, a button in a mouse, etc.

In this case, the virtual movement of the pad due to the breathing movement may involve the movement of the virtual organic tissues generated within the virtual space. Then, this movement may be taken into account during the performance of the following disclosed exercises.

Training may comprise one or more exercises. In case of more than one exercise, the exercises may be executed according to a predetermined order (for example, according to the level of difficulty of the exercises) or may be executed in a randomly way.

At this point it is important to highlight that a login of the user to perform the training (that is, the exercises) may be required. Obviously, the user must have been previously registered in the system. This way, information or data, for example, about the performance of the exercises may be stored associated to the user. Consequently, the method may also comprise a step of receiving identification data of the user to be identified. The information or data may be a user ID and a password, a biometric parameter, etc.

The start of the exercises may be established by the user acting on, for example, a button on a mouse, a key on a keyboard, a pedal, a microphone, etc. When the user acts on any of said elements, a control or data signal may be generated, said signal indicating to the control system 10 that the exercise starts. The end of the exercise may be indicated to the control system in the same way. The time spent by a user for performing an exercise may be obtained by the control system by means of a timer or like.

On the other hand, progress in training may require a positive evaluation in the present exercise to move to the next exercise. Alternatively, each exercise may be performed but training is not completed until each exercise or most of them has a positive evaluation.

Furthermore, each exercise may have different levels of difficulty.

The performance of each exercise may be evaluated according to at least one parameter that may be different for each exercise. In addition, the performance of each exercise may be evaluated separately or taking into account previous performances of the same exercise.

In some examples, augmented reality may be generated with the aim of helping the student during the performance of an exercise. This way, for example, lines or like in the graphic user interface (i.e. on the simulated images) showed in the screen associated to the control system may indicate the user how the exercise must be performed.

This way, it is possible, for example, to certificate professionals in the use of imaging-guided interventions (e.g. ultrasound-guided interventions) through the exercises. Issued certificates should be internationally recognized and qualify professionals for any job that requires advanced skills in the use of ultrasounds (or another imaging technique) in medicine.

On the other hand, the generated simulated images during the performance of an exercise or training may be recorded or stored. This way, said images may be evaluated or analyzed for the user or for professionals once the exercise is finished or during the performance of an exercise. Furthermore, all actions performed by the user during the execution of an exercise may be stored or captured, for example, in 3D (for example, in a movie format or as a sequence of images captured during the performance of an exercise). Thus, the actions performed by the user during the exercise may be analyzed or evaluated from different points of view.

Consequently, the method executed by the control system may comprise, during the execution of an exercise, recording the generated simulated images.

Other data may be obtained during the performance of an exercise and may be recorded or stored. Thus, the method executed by the control system may comprise obtaining data relating to the performance of an exercise. The method may also comprise recording or storing the obtained data relating to the performance of the training.

Based on this data (for example, time spent for executing an exercise, the generated simulated images, predetermined parameters associated to each exercise, etc.), an evaluation of the training (for example, of each exercise) may be performed. Consequently, the method executed by the control system may comprise evaluating training form obtained data relating to the performance of the exercises comprised in the training.

The results of the evaluation of the training of each user may be only accessible by the user and/or may be public such that a ranking of users may be established. This way, a competition between users may be created.

In some examples, a remote professional may be connected to the control system 10 such that said professional may provide orders or comments to the user during the execution of an exercise or once an exercise is finished. Furthermore, the professional may remotely select or set up the exercise to be performed by the user.

Exercises may be separated in intrusive and non-intrusive exercises. In case of non-intrusive exercises, at least an imaging scanner simulator (in the present examples, an ultrasound scanner simulator) and a pad may be required. On the contrary, in case of intrusive exercises, at least a pad, an imaging scanner simulator and a needle may be required.

As described above, the control system may block an exercise until a pad, a needle and/or an imaging scanner simulator adequate (it may be determined through the corresponding identification element of the needle, the pad and/or the imaging scanner simulator) for performing the exercise are present in the simulation system.

Following, a plurality of exercises will be disclosed. Obviously, other non-disclosed exercises are possible.

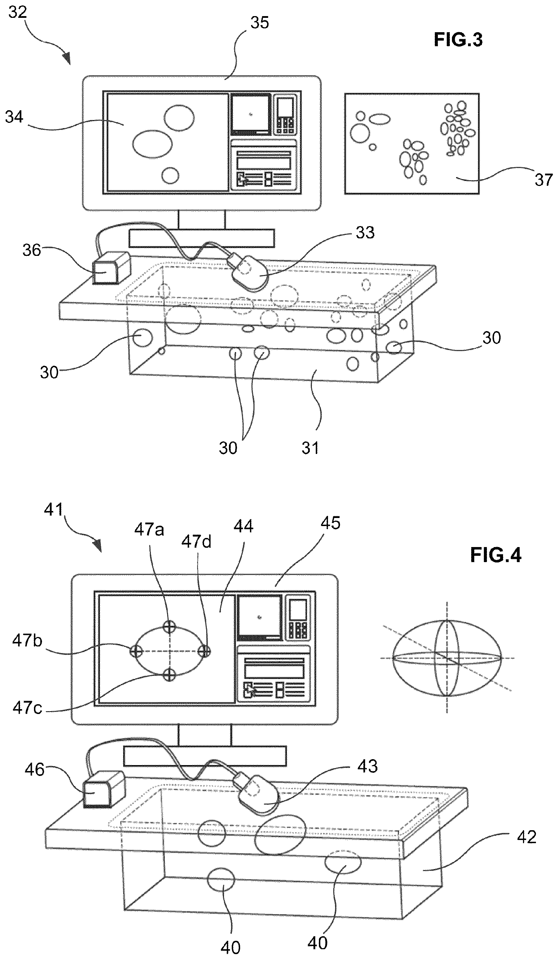

From Figure 3 a first non-intrusive exercise may be disclosed. In this exercise, the main object may be achieving comprehensive scanning routines by determining the number of virtual organic tissues 30 generated in the virtual space of the pad 31. That is, according to the method of training described above, a control system 32 (by means of the corresponding computer program and/or electronic circuits) may generate at least one virtual organic tissue 30 in any position within the virtual space corresponding to the physical space occupied by the pad 31. Then, the user may move the imaging scanner simulator 33 over the pad until determine, viewing the simulated images 34 on a screen 35 associated to the control system 32, the number of generated virtual organic tissues in the virtual space. According to the method executed on the control system 32, for each movement of the imaging scanner simulator 33, the control system may receive the position and orientation of said imaging scanner simulator, said position and orientation being able to be obtained by a position tracking device 36 from the location of the first position sensor comprised in the imaging scanner simulator when it is over or near the pad 31. Next, the control system 32, for each received position and orientation of the imaging scanner simulator 33, may obtain a virtual section plane in the virtual space of the pad, generate a simulated image 34 from the obtained virtual section plane and display it on the screen 35. Thus, the user, viewing said simulated images on the screen, may determine the number of virtual organic tissues generated within the virtual space.

In this first exercise, the parameters for evaluating the performance of the exercise may be, for example, the real number of generated virtual organic tissues 30, the number of the virtual organic tissues determined by the user and the time spent for determining said number by the user.

The number of virtual organic tissues 30 determined by the user may be provided to the control system 32 for evaluating the performance by marking each virtual organic tissue visualized by the user. This marked of each virtual organic tissue may be performed acting on a predetermined element connected to the control system, such as a key of a keyboard, a button, a pedal, a microphone, etc. when the virtual organic tissue is being viewed by the user on the screen 35.

From the same Figure 3 a second non-intrusive exercise may be disclosed. In this exercise, the main object may be achieving comprehensive scanning routines by obtaining the simulated image 37 comprising more virtual organic tissues 30 generated in the virtual space. That is, according to the method of training described above, the control system 32 may generate at least one virtual organic tissue 30 in any position within the virtual space corresponding to the physical space occupied by the pad 31. Then, the user may move the imaging scanner simulator 33 over the pad until obtaining, viewing the simulated images 34 on the screen 35 associated to the control system 32, the simulated image 37 comprising more virtual organic tissues 30 generated in the virtual space. According to the method executed on the control system, for each movement of the imaging scanner simulator 33, the control system may receive the position and orientation of said imaging scanner simulator, said position and orientation being able to be obtained by the position tracking device 36 from the location of the first position sensor comprised in the imaging scanner simulator when it is over or near the pad. Next, the control system 32, for each received position and orientation of the imaging scanner simulator 33, may obtain a virtual section plane in the virtual space of the pad, generate a simulated image 34 from the obtained virtual section plane and display it on the screen 35.

In this second exercise, the parameters for evaluating the performance of the exercise may be, for example, the real number of generated virtual organic tissues 30 present in the simulated image comprising more virtual organic tissues generated in the virtual space, the number of the virtual organic tissues in the simulated image obtained by the user and the time spent for obtaining said simulated image.

The number of virtual organic tissues present in the simulated image obtained by the user may be provided to the control system 32 for evaluating the performance by marking each virtual organic tissue 30 visualized by the user. This marked of each virtual organic tissue may be performed acting on a predetermined element connected to the control system, such as a mouse, a key of a keyboard, a button, a pedal, a microphone, etc. when the virtual organic tissue is being viewed by the user on the screen.

Based on also Figure 3 a third non-intrusive exercise may be disclosed. In this exercise, the main object may be achieving comprehensive scanning routines by determining the largest virtual organic tissue generated in the virtual space. That is, according to the method of training described above, the control system 32 may generate at least one virtual organic tissue 30 in any position within the virtual space corresponding to the physical space occupied by the pad 31. Then, the user may move the imaging scanner simulator 33 over the pad until determining, viewing the simulated images 34 on the screen 35 associated to the control system 32, the largest virtual organic tissue generated in the virtual space. According to the method executed on the control system, for each movement of the imaging scanner simulator 33, the control system 32 may receive the position and orientation of said imaging scanner simulator, said position and orientation being able to be obtained by the position tracking device 36 from the location of the first position sensor comprised in the imaging scanner simulator when it is over or near the pad 31. Next, the control system 32, for each received position and orientation of the imaging scanner simulator 33, may obtain a virtual section plane in the virtual space of the pad, generate a simulated image 34 from the obtained virtual section plane and display it on the screen 35.

In this third exercise, the parameters for evaluating the performance of the exercise may be, for example, the real largest virtual organic tissue generated in the virtual space, the largest virtual organic tissue determined by the user and the time spent for determining said largest virtual organic tissue by the user.

The largest virtual organic tissue determined by the user may be provided to the control system for evaluating the performance by marking said virtual organic tissue. This marked of the virtual organic tissue may be performed acting on a predetermined element connected to the control system, such as a mouse, a key of a keyboard, a button, a pedal, a microphone, etc. when the virtual organic tissue is being viewed by the user on the screen.

All the described for said third exercise may be applied for determining, for example:
- the smallest virtual organic tissue generated in the virtual space;
- the most echogenic virtual organic tissue generated in the virtual space;
- the less echogenic virtual organic tissue generated in the virtual space.

Clearly, the features described for the third exercise may be adapted according to the object of each exercise. This way, if the object of the exercise is to find the smallest virtual organic tissue generated in the virtual space then, for example, the user may move the imaging scanner simulator 33 over the pad until determining, viewing the simulated images 34 on the screen 35 associated to the control system 32, the smallest virtual organic tissue generated in the virtual space or the parameters for evaluating the performance of the exercise may be the real smallest virtual organic tissue generated in the virtual space and the smallest virtual organic tissue determined among others.

Another non-intrusive exercise may be described based on Figure 4. In this exercise, the main object may be achieving comprehensive scanning routines by determining the diameter and/or the volume of a virtual organic tissue 40 generated in the virtual space. That is, according to the method of training described above, a control system 41 may generate at least one virtual organic tissue 40 in any position within the virtual space corresponding to the physical space occupied by a pad 42. Then, the user may move a imaging scanner simulator 43 over the pad until obtaining the largest section plane of the virtual organic tissue to be analyzed from viewing the simulated images 44 on the screen 45 associated to the control system 41. According to the method executed on the control system, for each movement of the imaging scanner simulator 43, the control system 41 may receive the position and orientation of said imaging scanner simulator, said position and orientation being able to be obtained by a position tracking device 46 from the location of the first position sensor comprised in the imaging scanner simulator 43 when it is over or near the pad 42. Next, the control system 41, for each received position and orientation of the imaging scanner simulator, may obtain a virtual section plane in the virtual space of the pad, generate a simulated image from the obtained virtual section plane and display it on the screen.

The diameter/volume may be determined by the control system 41 by the user marking different points 47a,47b,47c,47d of said virtual organic tissue (that is, by marking points in the obtained section plane of the virtual organic tissue). This marked of points in the virtual organic tissue may be performed acting on a predetermined element connected to the control system, such as a mouse, a key of a keyboard, a button, a pedal, a microphone, etc. when the virtual organic tissue is being viewed by the user on the screen 45.

The parameters for evaluating the performance of this exercise may be, for example, the real diameter/volume of the virtual organic tissue selected by the user, the diameter/volume obtained by the user of said selected virtual organic tissue and the time spent for determining the diameter/volume of the selected virtual organic tissue.

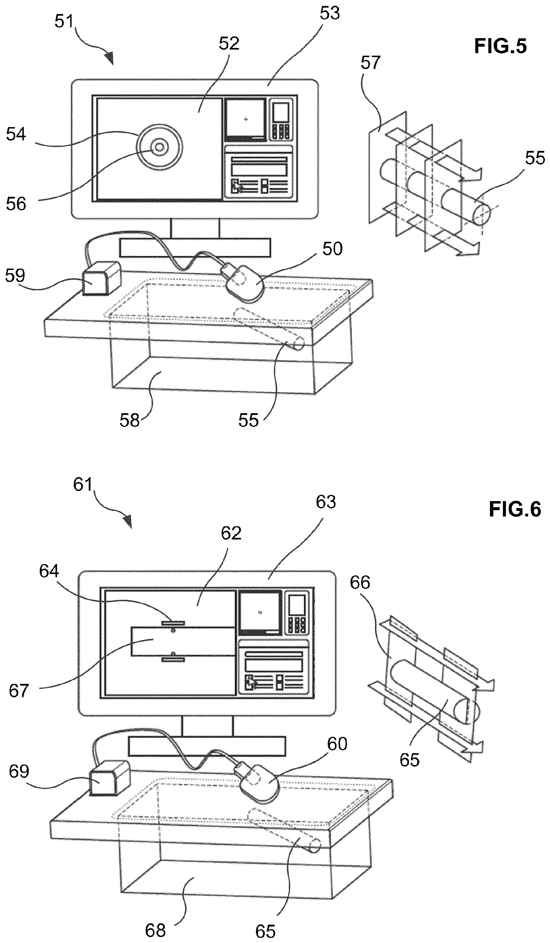

According to Figure 5 another non-intrusive exercise may be described. In this exercise, the main object may be achieving comprehensive scanning routines by moving an imaging scanner simulator 50 along an axial axis keeping constant inclination and rotation. For this exercise, the method executed by a control system 51 may further comprise:
- generating a virtual element associated to the imaging scanner simulator 50 within the virtual space so that at least one generated image 52 displayed on a screen 53 comprises at least the cross-section 54 of said virtual element.

Furthermore, in said exercise, a virtual organic tissue generated within the virtual space may be a tube 55 or like (for example, with a circular cross-section, square cross-section, rectangular cross-section, etc.) and the virtual element associated to the imaging scanner simulator may be a ring or like (for example, with the same cross-section as the tube or different) with an interior surface larger than the cross-section 56 of the tube or like.

In this case, the non-intrusive exercise is based on identifying an axial section plane 57 of a first end of the tube 55 and, by maintaining the cross-section 56 of the tube inside the cross-section 54 of the ring, following the tube along its longitudinal axis with the ring from the first end to the other end of the tube.

That is, according to the method of training described above, the control system 51 may generate at least one virtual organic tissue 55 (for example, a tube or like) in any position within the virtual space corresponding to the physical space occupied by a pad 58 and the virtual element associated to the imaging scanner simulator 50 such as a ring. Then, the user may move the imaging scanner simulator over the pad 58 until identifying the axial section plane 57 of a first end of the tube 55 from viewing the simulated images 52 on the screen 53 associated to the control system 51. According to the method executed on the control system, for each movement of the imaging scanner simulator 50, the control system 51 may receive the position and orientation of said imaging scanner simulator, said position and orientation being able to be obtained by a position tracking device 59 from the location of the first position sensor comprised in the imaging scanner simulator when it is over or near the pad 58. Next, the control system 51, for each received position and orientation of the imaging scanner simulator 50, may obtain a virtual section plane in the virtual space of the pad, generate a simulated image from the obtained virtual section plane and display it on the screen.

Once, the axial section plane 57 of a first end of the tube 55 is identified, it is required to maintain the cross-section 56 of the tube inside the cross-section 54 of the ring, following the tube 55 along its longitudinal axis with the ring from the first end to the other end of the tube.

The parameters for evaluating the performance of this exercise may be, for example, the number of collisions between the ring and the tube and the time spent for identifying the axial section plane of a first end of the tube and for following the tube along its longitudinal axis with the ring from the first end to the other end of the tube.

At this point it is important to highlight that this exercise allows for a variety of embodiments. Thus, the tube and the ring may be, for example:
- A straight, horizontal and superficial tube / a wide ring;
- A straight, horizontal and deep tube / a wide ring;
- A straight, sloping and superficial tube / a wide ring;
- A straight, horizontal and superficial tube / a tight ring;
- A straight, horizontal and deep tube / a tight ring;
- A straight, sloping and superficial tube / a tight ring;
- A tube with a horizontal curvature / a wide ring;
- A tube with a vertical curvature / a wide ring;
- A tube with a horizontal curvature / a tight ring;
- A tube with a vertical curvature / a tight ring;
- A tube with two curves combined between the sagittal and axial planes / a wide ring;
- A tube with two curves combined between the sagittal and axial planes / a tight ring.

Based on Figure 6 another non-intrusive exercise may be described. In this exercise, the main object may be achieving comprehensive scanning routines by moving an imaging scanner simulator 60 along a sagittal axis keeping constant inclination and rotation. For this exercise, the method executed by a control system 61 may further comprise:
- generating a virtual element associated to the imaging scanner simulator 60 within the virtual space so that at least one generated image 62 displayed on a screen 63 comprises at least a longitudinal section 64 of said virtual element.

Furthermore, in said exercise, a virtual organic tissue generated within the virtual space may be a tube 65 or like (for example, with a circular cross-section, square cross-section, rectangular cross-section, etc.) and the virtual element associated to the imaging scanner simulator may be a ring or like (for example, with the same cross-section as the tube or different) with an interior surface larger than the cross-section of the tube.

In this case, the non-intrusive exercise is based on identifying a sagittal section plane 66 of a first end of the tube 65 and, by maintaining the longitudinal-section 67 of the tube inside the longitudinal section 64 of the ring 50, following the tube 65 along its longitudinal axis with the ring from the first end to the other end of the tube.

This way, according to the method of training described above, the control system 61 may generate at least one virtual organic tissue 65 (for example, a tube or like) in any position within the virtual space corresponding to the physical space occupied by a pad 68 and the virtual element associated to the imaging scanner simulator 60 such as a ring or like. Then, the user may move the imaging scanner simulator over the pad 68 until identifying the sagittal section plane 66 of a first end of the tube 65 from viewing the simulated images 62 on the screen 63 associated to the control system 61. According to the method executed on the control system, for each movement of the imaging scanner simulator 60, the control system may receive the position and orientation of said imaging scanner simulator, said position and orientation being able to be obtained by a position tracking device 69 from the location of the first position sensor comprised in the imaging scanner simulator 60 when it is over or near the pad 68. Next, the control system 61, for each received position and orientation of the imaging scanner simulator 60, may obtain a virtual section plane in the virtual space of the pad, generate a simulated image 62 from the obtained virtual section plane and display it on the screen 63.

Once, the sagittal section plane 66 of a first end of the tube 65 is identified, it is required to maintain the longitudinal section 67 of the tube inside the longitudinal section 64 of the ring, following the tube along its longitudinal axis with the ring from the first end to the other end of the tube.

The parameters for evaluating the performance of this exercise may be, for example, the number of collisions between the ring and the tube and the time spent for identifying a sagittal section plane 66 of a first end of the tube 65 and for following the tube along its longitudinal axis with the ring from the first end to the other end of the tube.

At this point it is important to highlight that this exercise allows for a variety of embodiments. Thus, the tube and the ring may be, for example:
- A straight, horizontal and superficial tube / a wide ring;
- A straight, horizontal and deep tube / a wide ring;
- A straight, sloping and superficial tube / a wide ring;
- A straight, horizontal and superficial tube / a tight ring;
- A straight, horizontal and deep tube / a tight ring;
- A straight, sloping and superficial tube / a tight ring;
- A tube with a horizontal curvature / a wide ring;
- A tube with a vertical curvature / a wide ring;
- A tube with a horizontal curvature / a tight ring;
- A tube with a vertical curvature / a tight ring;
- A tube with two curves combined between the sagittal and axial planes / a wide ring;
- A tube with two curves combined between the sagittal and axial planes / a tight ring.

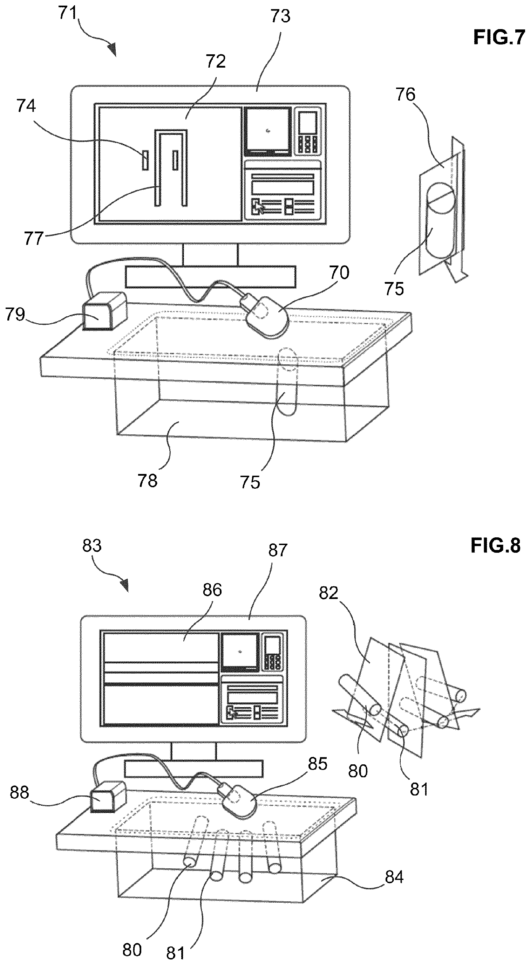

Another exercise may be described according to Figure 7. In this exercise, the main object may be achieving comprehensive scanning routines by moving an imaging scanner simulator 70 along a coronal axis keeping constant inclination and rotation. For this exercise, the method executed by a control system 71 may further comprise:
- generating a virtual element associated to the imaging scanner simulator within the virtual space so that at least one generated image 72 displayed on a screen 73 comprises at least the longitudinal section 74 of said virtual element.

In the exercise, a virtual organic tissue generated within the virtual space may be a tube 75 or like (for example, with a circular cross-section, square cross-section, rectangular cross-section, etc.) and the virtual element associated to the imaging scanner simulator 70 may be a ring or like (for example, with the same cross-section as the tube or different) with an interior surface larger than the cross-section of the tube or like.

In this case, the non-intrusive exercise is based on identifying a coronal section plane 76 of a first end of the tube 75 and, by maintaining a longitudinal section 77 of the tube inside the longitudinal section 74 of the ring, following the tube along its coronal axis with the ring from the first end to the other end of the tube.

Consequently, according to the method of training described above, the control system 71 may generate at least one virtual organic tissue 75 (for example, a tube or like) in any position within the virtual space corresponding to the physical space occupied by a pad 78 and the virtual element associated to the imaging scanner simulator 70 such as a ring or like. Then, the user may move the imaging scanner simulator over the pad until identifying the coronal section plane 76 of a first end of the tube 75 from viewing the simulated images 72 on the screen 73 associated to the control system 71. According to the method executed on the control system, for each movement of the imaging scanner simulator 70, the control system may receive the position and orientation of said imaging scanner simulator, said position and orientation being able to be obtained by a position tracking device 79 from the location of the first position sensor comprised in the imaging scanner simulator when it is over or near the pad 78. Next, the control system 71, for each received position and orientation of the imaging scanner simulator, may obtain a virtual section plane in the virtual space of the pad, generate a simulated image 72 from the obtained virtual section plane and display it on the screen 73.

Once, the coronal section plane 76 of a first end of the tube 75 is identified, it is required to maintain the longitudinal section 77 of the tube inside the longitudinal section 74 of the ring, following the tube or like along its longitudinal axis with the ring from the first end to the other end of the tube.

The parameters for evaluating the performance of this exercise may be, for example, the number of collisions between the ring and the tube and the time spent for identifying a coronal section plane 76 of a first end of the tube 75 and for following the tube along its longitudinal axis with the ring from the first end to the other end of the tube.

At this point it is important to highlight that this exercise allows for a variety of embodiments according to different tube lengths.

Another exercise may be described according to Figure 8. In this exercise, the main object may be achieving comprehensive scanning routines by mentally controlling and quantifying the inclination plane and the position relative to other structures.

In said exercise, at least two virtual organic tissues 80,81 (for example, tubes or like) may be generated within the virtual space.

In this case, the non-intrusive exercise is based on identifying the perpendicular plane 82 to a theoretical plane joining the longitudinal axis of the two tubes 80,81, the perpendicular plane being parallel and equidistant to the tubes.

Thus, according to the method of training described above, a control system 83 may generate at least two virtual organic tissues 80,81 (for example, tubes or like) in any position within the virtual space corresponding to the physical space occupied by a pad 84. Then, the user may move an imaging scanner simulator 85 over the pad until identifying the perpendicular plane 82 to a theoretical plane joining the longitudinal axis of the two tubes 80,81 from viewing the simulated images 86 on the screen 87 associated to the control system 83. According to the method executed on the control system, for each movement of the imaging scanner simulator 85, the control system may receive the position and orientation of said imaging scanner simulator, said position and orientation being able to be obtained by a position tracking device 88 from the location of the first position sensor comprised in the imaging scanner simulator 85 when it is over or near the pad. Next, the control system 83, for each received position and orientation of the imaging scanner simulator, may obtain a virtual section plane in the virtual space of the pad 84, generate a simulated image 86 from the obtained virtual section plane and display it on the screen 87.

The parameters for evaluating the performance of this exercise may be, for example, the differential between the ideal plane and the plane marked by the user, and the time spent for identifying the perpendicular plane 82 to a theoretical plane joining the longitudinal axis of the two tubes 80,81.

At this point it is important to highlight that this exercise allows for a variety of embodiments according to different tube lengths.

Following, intrusive exercises will be described. For executing these exercises a needle configured to be inserted into the physical space of the pad may be required.

For these exercises, the method executed by a control system may further comprise the following:
- for each movement of the needle, receiving its position and orientation, said position and orientation being obtained by the tracking device from the location of the third position sensor when the needle is inserted into or over the physical space of the pad;
- for each received position and orientation of the needle, generating a virtual needle within the virtual space in a position and orientation according to said received position and orientation of the needle;
- from the last received position and orientation of the imaging scanner simulator, obtaining a virtual section plane in the virtual space of the pad;
- generating a simulated image from the obtained virtual section plane, which comprises at least the cross-section of the virtual needle if the obtained virtual section plane cuts the virtual needle in the virtual space;
- displaying the generated image on the screen.

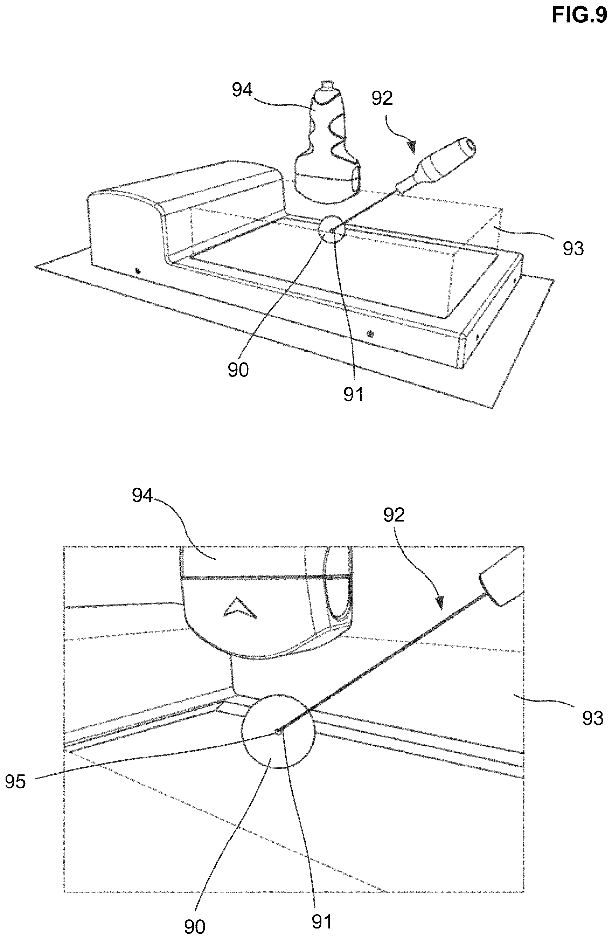

A first intrusive exercise may be described according to Figure 9. In this exercise, the main object may be achieving comprehensive scanning routines by 3D orienting and marking a path to a section plane of a virtual organic tissue. Basically, this exercise allows training punctures.

In said exercise, at least one virtual organic tissue 90 (for example, a sphere or like) may be generated within the virtual space.

In this case, the first intrusive exercise is based on arranging the tip 91 of a virtual needle as close as possible to the center 95 of the virtual organic tissue 90 generated within the virtual space, by inserting a needle 92 into the physical space of a pad 93.

That is, according to the method of training described above, a control system (not shown) may generate at least one virtual organic tissue 90 (for example, a sphere or like) in any position within the virtual space corresponding to the physical space occupied by the pad 93. Then, the user may move an imaging scanner simulator 94 over the pad and insert the needle 92 into the pad until arranging the tip 91 of the virtual needle as close as possible to the center 95 of the virtual organic tissue 90 from viewing simulated images on a screen associated to the control system. According to the method executed on the control system, for each movement of the imaging scanner simulator 94 and/or the needle 92, the control system may receive the position and orientation of said imaging scanner simulator and/or of the needle, said position and orientation being able to be obtained by a position tracking device from the location of the first position sensor comprised in the imaging scanner simulator when it is over or near the pad and the location of the third position sensor comprised in the needle when they are in or near the pad. Next, the control system, for each received position and orientation of the imaging scanner simulator 94 and/or the needle 92, may obtain a virtual section plane in the virtual space of the pad, generate a simulated image from the obtained virtual section plane and display it on the screen.

The parameters for evaluating the performance of this exercise may be, for example, the distance from the tip 91 of the needle 92 to the center 95 of the virtual organic tissue 90 (e.g. a sphere) and the time spent for arranging the tip of the virtual needle as close as possible to the center of the virtual organic tissue.

For the following disclosed intrusive exercises the needle need to comprise an element actionable by a user. This way, the method executed by the control system may comprise receiving at least one control or data signal generated by the actionable element comprised in the needle when it is actuated by a user. Alternatively, said first actionable element may be arranged externally to the needle and it may be, for example, a button in a mouse, a key in a keyboard, a pedal, a microphone, etc. In any case, said actionable element may generate a control or data signal to be considered during the performance of an exercise.

In any case, the function of the element actionable by a user may be different according to the exercise and/or according to the moment of the performance of the exercise. Obviously, an element for each function may be comprised in or associated to the control system.

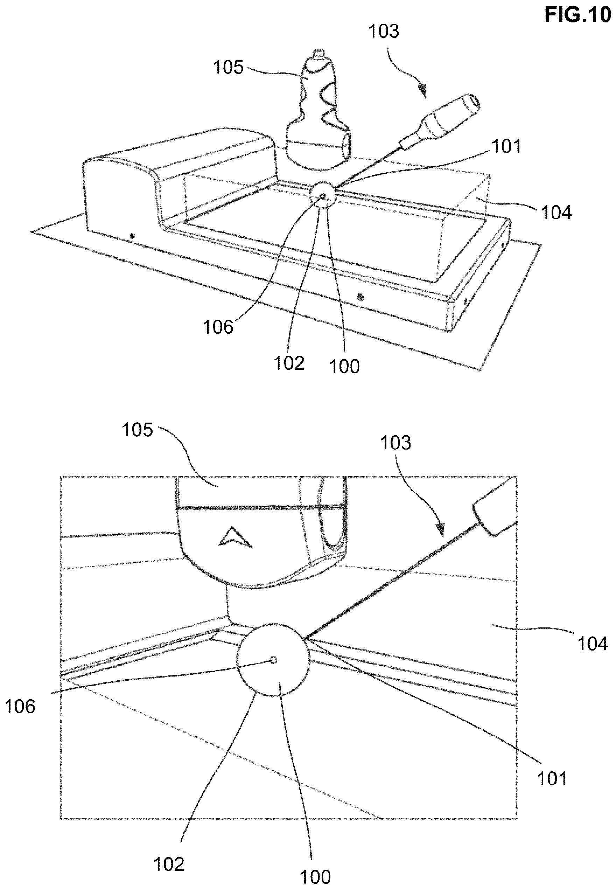

A second intrusive exercise may be described according to Figure 10. In this exercise, the main object may be achieving comprehensive scanning routines by 3D orienting and marking a path to a section plane of a virtual organic tissue. Basically, this exercise allows training biopsies.

In said exercise, at least one virtual organic tissue 100 (for example, a sphere or like) may be generated within the virtual space.

Basically, the exercise is based on arranging the tip 101 of the virtual needle as close as possible to the external surface 102 of the virtual organic tissue 100, by inserting a needle 103 into the physical space of a pad 104, and, after receiving at least one control or data signal generated by a first actionable element, simulating the capture of a part of tissue from the virtual organic tissue 100 according to the position of the tip 101 of the virtual needle.

That is, according to the method of training described above, a control system may generate at least one virtual organic tissue 100 (for example, a sphere or like) in any position within the virtual space corresponding to the physical space occupied by the pad 104. Then, the user may move an imaging scanner simulator 105 over the pad and, when the virtual organic tissue is found or detected, insert the needle 103 into the pad 104 until arranging the tip 101 of the virtual needle on the surface 102 of the virtual organic tissue 100 from viewing simulated images on a screen associated to the control system. According to the method executed on the control system, for each movement of the imaging scanner simulator 105 and/or the needle 103, the control system may receive the position and orientation of said imaging scanner simulator and/or of the needle, said position and orientation being able to be obtained by a position tracking device from the location of the first position sensor comprised in the imaging scanner simulator when it is over or near the pad and/or the location of the third position sensor comprised in the needle when they are in or near the pad 104. Next, the control system, for each received position and orientation of the imaging scanner simulator and/or the needle, may obtain a virtual section plane in the virtual space of the pad, generate a simulated image from the obtained virtual section plane and display it on the screen.

Next, acting on an element actionable by the user disclosed above, simulating the capture of a part of tissue (a cannula of the virtual needle has to pass through the center 106 of the virtual organic tissue 100 when the cannula has been shut) from the virtual organic tissue 100 according to the position of the tip 101 of the virtual needle.

The parameters for evaluating the performance of this exercise may be, for example, the distance from the position of the cannula of the virtual needle when the cannula has been shut to the center 106 of the virtual organic tissue 100 (e.g. a sphere) and the time spent for arranging the tip 101 of the virtual needle on the surface 102 of the virtual organic tissue and for capturing a part of tissue from the virtual organic tissue 100.

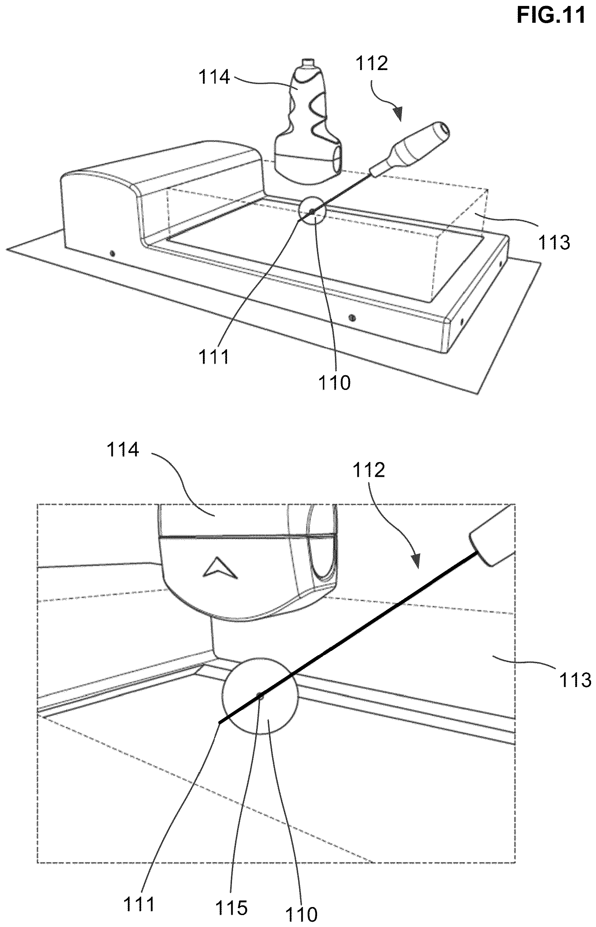

A third intrusive exercise may be described according to Figure 11. In this exercise, the main object may be achieving comprehensive scanning routines by filling a generated virtual organic tissue with a heat ball covering the entire volume of the virtual organic tissue so that the virtual organic tissue and the tissue around it are virtually ablated. The heat ball may be as concentric as possible with respect to the virtual organic tissue. Basically, this exercise allows training ablations.

In said exercise, at least one virtual organic tissue 110 (for example, a sphere or like) may be generated within the virtual space.

Basically, the exercise is based on inserting the tip 111 of the virtual needle beyond the virtual organic tissue 110, by inserting the needle 112 into the physical space of a pad 113, and, for a received control or data signal generated by the first actionable element, simulating the automatic generation of a heat ball or like covering the virtual organic tissue. This way, the generated heat ball may cover the entire volume of the virtual organic tissue so that the virtual organic tissue and the tissue around it are virtually ablated. In fact, it may be simulated the "totally ablated" of the target virtual organic tissue.

That is, according to the method of training described above, a control system may generate at least one virtual organic tissue 110 (for example, a sphere or like) in any position within the virtual space corresponding to the physical space occupied by the pad 113. Then, the user may move an imaging scanner simulator 114 over the pad and, when the target virtual organic tissue 110 is found or detected, insert the needle 112 in the pad until arranging the tip 111 of the virtual needle beyond the virtual organic tissue (for example, passing through the center point 115 of the virtual organic tissue) from viewing simulated images on the screen associated to the control system. According to the method executed on the control system, for each movement of the imaging scanner simulator 114 and/or the needle 112, the control system may receive the position and orientation of said imaging scanner simulator and/or of the needle, said position and orientation being able to be obtained by a position tracking device from the location of the first position sensor comprised in the imaging scanner simulator when it is over or near the pad and/or the location of the third position sensor comprised in the needle when they are in or near the pad 113. Next, the control system, for each received position and orientation of the imaging scanner simulator and/or the needle, may obtain a virtual section plane in the virtual space of the pad, generate a simulated image from the obtained virtual section plane and display it on the screen.

Next, acting on the element actionable by the user, a heat ball or volume grow until covering the entire virtual organic tissue (it will stop growing automatically), so that the virtual organic tissue and the tissue around it are virtually and totally ablated.

The parameters for evaluating the performance of this exercise may be, for example, the volume percentage occupied by the heat ball and the time spent for performing the exercise.

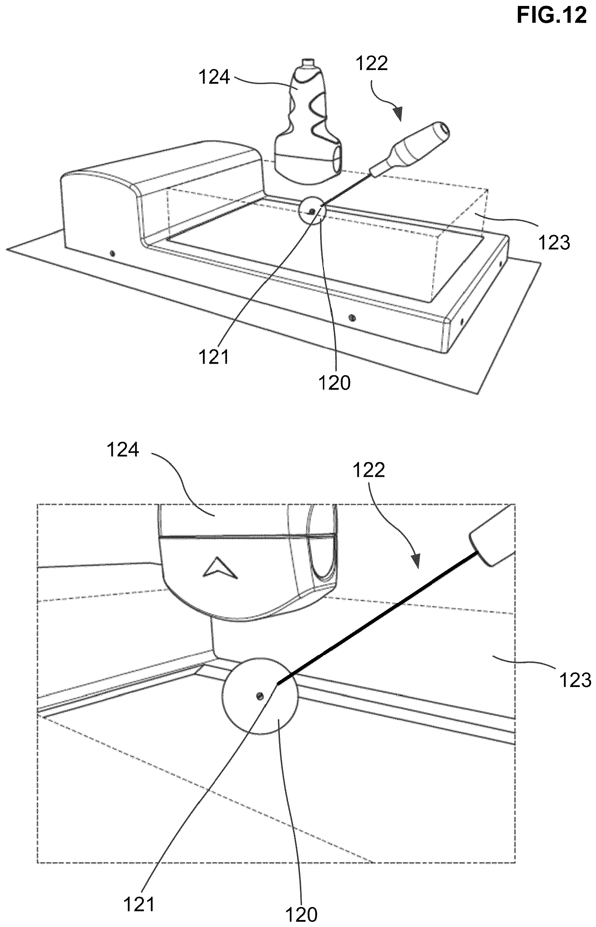

A fourth intrusive exercise may be described according to Figure 12. In this exercise, the main object may be achieving comprehensive scanning routines by filling a generated virtual organic tissue with heat balls without crossing the surface of the virtual organic tissue. Basically, this exercise allows training for moving-shot techniques of ablation of tumors.

In said exercise, at least one virtual organic tissue 120 (for example, a sphere or like) may be generated within the virtual space.

Basically, the exercise is based on inserting the tip 121 of the virtual needle into the virtual organic tissue 120 (the virtual needle is always inserted into the virtual organic tissue during the performance of the exercise), by inserting the needle 122 into the physical space of a pad 123, and, for each received control or data signal generated by the first actionable element (maintaining the action over the first actionable element for a time may be required for establishing the size of the heat ball to be generated), simulating the automatic generation of a heat ball or like inside the virtual organic tissue.

That is, according to the method of training described above, a control system may generate at least one virtual organic tissue 120 (for example, a sphere or like) in any position within the virtual space corresponding to the physical space occupied by the pad 123. Then, the user may move a imaging scanner simulator 124 over the pad and, when the target virtual organic tissue is found or detected, insert the needle 122 in the pad until arranging the tip 121 of the virtual needle into of the virtual organic tissue 120 (for example, passing through the center point of the virtual organic tissue) from viewing the simulated images on the screen associated to the control system. According to the method executed on the control system, for each movement of the imaging scanner simulator and/or the needle, the control system may receive the position and orientation of said imaging scanner simulator and/or of the needle, said position and orientation being able to be obtained by a position tracking device from the location of the first position sensor comprised in the imaging scanner simulator when it is over or near the pad and/or the location of the third position sensor comprised in the needle when they are in or near the pad. Next, the control system, for each received position and orientation of the imaging scanner simulator and/or the needle, may obtain a virtual section plane in the virtual space of the pad, generate a simulated image from the obtained virtual section plane and display it on the screen.

Next, acting on the element actionable by the user, a heat ball or volume grow until a predefined limit inside the virtual organic tissue while the user acts on said element. A lot of heat balls may be generating until filling the generated virtual organic tissue with heat balls without crossing the surface of the virtual organic tissue.

Another option may be to generate a heat ball or volume acting the user on said element. Next, the user may remove the needle leaving a trail of ablated tissue according to the generated heat ball or volume.

The parameters for evaluating the performance of this exercise may be, for example, the volume percentage occupied by the heat balls, the contact of the heat balls with the surface of the virtual organic tissue and the time spent for performing the exercise.

At this point it is important to highlight that other parameters may be used to evaluate the performance of an intrusive exercise. Basically, the parameters may be associated to harmful actions performed by a user. Said other parameters may be used to evaluate an exercise once the exercise is finished or during the performance of the exercise. Any of these parameters may be, for example:
- time during which the needle is in the virtual section plane obtained according to the position and orientation of the imaging scanner simulator;
- number or times the needle is inserted into the physical space of the pad during the performance of an exercise;
- number of times the needle is deformed during the performance of an exercise.

Although only a number of examples have been disclosed herein, other alternatives, modifications, uses and/or equivalents thereof are possible. Furthermore, all possible combinations of the described examples are also covered. Thus, the scope of the present disclosure is defined by the appended claims.

## Claims

1. A method of training imaging-guided interventions by means of a control system (10) having associated at least one screen (12) and being connectable to a simulation system (11), the simulation system (11) comprising:
- a pad (13), wherein the pad (13) is a homogeneous matrix with a three-dimensional shape and the pad (13) is covered with an opaque membrane, wherein the pad (13) comprises a pad identification element configured to identify the type of pad comprised in the simulation system;
- an imaging scanner simulator (14) comprising a first position sensor and being configured to be moved over the pad (13), wherein the imaging scanner simulator is configured to simulate a real ultrasound transducer;
- a position tracking device (15) configured to track the position and orientation of the imaging scanner simulator (14) relative to the pad (13) by locating the first position sensor;
- a needle comprising a first needle position sensor and being configured to be inserted into the physical space of the pad (13), wherein the position tracking device (15) is also configured to track the position and orientation of the needle relative to the pad (13) by locating the first needle position sensor, wherein the first needle position sensor is arranged in the tip of the needle, wherein the needle comprises a second needle position sensor arranged at the handle of the needle or close to it, wherein the position tracking device (15) is configured to track the position and orientation of the handle of the needle relative to the pad (13) by locating the second needle position sensor,
the method comprising, during the training:
- receiving at least one control or data signal from the pad identification element to identify the type of pad (13) comprised in the simulation system;
- generating a virtual space corresponding to the physical space occupied by the pad;
- generating at least one virtual organic tissue in any position within the virtual space corresponding to the physical space occupied by the pad (13);
- for each movement of the imaging scanner simulator (14), receiving its position and orientation, said position and orientation being obtained by the tracking device (15) from the location of the first position sensor when it is over or near the pad (13);
- for each movement of the needle, receiving its position and orientation, said position and orientation being obtained by the tracking device (15) from the location of the first needle position sensor and the second needle position sensor when the needle is inserted into or over the physical space of the pad (13);
- for each received position and orientation of the needle, determining how much the needle is deformed during its insertion in the physical space and generating a virtual needle within the virtual space in a position and orientation according to said received position and orientation of the needle;
- for each received position and orientation of the imaging scanner simulator (14), obtaining a virtual section plane in the virtual space of the pad (13);
- generating a simulated image from the obtained virtual section plane, which comprises a section of at least one of the generated virtual organic tissues if the obtained virtual section plane cuts the virtual organic tissue in the virtual space and a section of the virtual needle if the obtained virtual section plane cuts the virtual needle in the virtual space;
- displaying the generated image on the screen (12).

2. The method according to claim 1, wherein the imaging scanner simulator (14) comprises a first identification element configured to identify the type of imaging scanner simulator (14) comprised in the simulation system, the method comprising:
- receiving at least one control or data signal from the first identification element to identify the type of imaging scanner simulator (14) comprised in the simulation system.

3. The method according to any of claims 1 to 2, wherein the pad (13) comprises at least one second position sensor, wherein the position tracking device (15) is also configured to track the position and orientation of the pad (13) by locating the second position sensor, the method further comprising:
- for each movement of the pad (13), receiving its position and orientation, said position and orientation being obtained by the tracking device (15) from the location of the second position sensor;
- for each received position and orientation of the pad (13) and the received position and orientation of the imaging scanner simulator (14), obtaining a virtual section plane in the virtual space of the pad (13) according to the movement of the pad (13);
- generating a simulated image from the obtained virtual section plane, which comprises a section of at least one of the generated virtual organic tissue if the obtained virtual section plane cuts the virtual organic tissue in the virtual space;
- displaying the generated image on the screen (12).

4. The method according to claim 3, further comprising, for each received position and orientation of the pad (13):
- determining the movement in the virtual space of the generated at least one virtual organic tissue.

5. The method according to claim 1, wherein the needle comprises a first element actionable by a user configured to generate a control or data signal to be considered during the training, the method comprising:
- receiving at least one control or data signal generated by the first actionable element comprised in the needle when it is actuated by a user.

6. The method according to any of claims 1 or 5, wherein the needle comprises a needle identification element configured to identify the type of needle comprised in the simulation system, the method comprising:
- receiving at least one control or data signal from the needle identification element to identify the type of needle comprised in the simulation system.

7. The method according to any of claims 1 to 6, further comprising:
- applying a breathing movement during generating the simulated image from the obtained virtual section plane.

8. The method according to any of clauses 1 to 7, wherein a virtual organic tissue is selected from:
- a virtual abnormal element representing a medical abnormality;
- a virtual model of an organ.

9. A control system for training imaging-guided interventions, the control system having associated at least one screen (12) and being connectable to a simulation system, the simulation system comprising:
- a pad (13), wherein the pad (13) is a homogeneous matrix with a three-dimensional shape and the pad (13) is covered with an opaque membrane, wherein the pad (13) comprises a pad identification element configured to identify the type of pad comprised in the simulation system, the method comprising;
- an imaging scanner simulator (14) comprising a first position sensor and being configured to be moved over the pad (13), wherein the imaging scanner simulator is configured to simulate a real ultrasound transducer;
- a position tracking device (15) configured to track the position and orientation of the imaging scanner simulator (14) relative to the pad (13) by locating the first position sensor;
- a needle comprising a first needle position sensor and being configured to be inserted into the physical space of the pad (13), wherein the position tracking device (15) is also configured to track the position and orientation of the needle relative to the pad (13) by locating the first needle position sensor, wherein the first needle position sensor is arranged in the tip of the needle, wherein the needle comprises a second needle position sensor arranged at the handle of the needle or close to it, wherein the position tracking device (15) is also configured to track the position and orientation of the other end of the needle relative to the pad (13) by locating the second needle position sensor,
the control system comprising:
- means for receiving at least one control or data signal from the pad identification element to identify the type of pad (13) comprised in the simulation system;
- means for generating a virtual space corresponding to the physical space occupied by the pad;
- means for generating at least one virtual organic tissue in any position within the virtual space corresponding to the physical space occupied by the pad (13);
- for each movement of the imaging scanner simulator (14), means for receiving its position and orientation, said position and orientation being obtained by the tracking device (15) from the location of the first position sensor when it is over or near the pad (13);
- for each movement of the needle, means for receiving its position and orientation, said position and orientation being obtained by the tracking device (15) from the location of the first needle position sensor and the second needle position sensor when the needle is inserted into or over the physical space of the pad (13);
- for each received position and orientation of the needle, means for determining how much the needle is deformed during its insertion in the physical space and generating a virtual needle within the virtual space in a position and orientation according to said received position and orientation of the needle;
- for each received position and orientation of the imaging scanner simulator (14), means for obtaining a virtual section plane in the virtual space of the pad (13);
- means for generating a simulated image from the obtained virtual section plane, which comprises a section of at least one of the generated virtual organic tissues if the obtained virtual section plane cuts the virtual organic tissue in the virtual space and a section of the virtual needle if the obtained virtual section plane cuts the virtual needle in the virtual space;
- mean for displaying the generated image on the screen (12).

## Patentansprüche

1. Ein Verfahren zum Trainieren von bildgebungsgeführten Eingriffen mittels eines Steuersystems (10), dem mindestens ein Bildschirm (12) zugeordnet ist und das mit einem Simulationssystem (11) verbunden werden kann, wobei das Simulationssystem (11) Folgendes umfasst:
- ein Pad (13), wobei das Pad (13) eine homogene Matrix mit einer dreidimensionalen Form ist und das Pad (13) mit einer lichtundurchlässigen Membran bedeckt ist, wobei das Pad (13) ein Padidentifikationselement umfasst, das dazu konfiguriert ist, die Art des Pads, das in dem Simulationssystem enthalten ist, zu identifizieren;
- einen bildgebenden Scannersimulator (14), der einen ersten Positionssensor umfasst und dazu konfiguriert ist, über das Pad (13) bewegt zu werden, wobei der bildgebende Scannersimulator dazu konfiguriert ist, einen realen Ultraschallwandler zu simulieren;
- eine Positionsverfolgungsvorrichtung (15), die dazu konfiguriert ist, die Position und Ausrichtung des bildgebenden Scannersimulators (14) relativ zu dem Pad (13) durch die Lokalisierung des ersten Positionssensors zu verfolgen;
- eine Nadel, die einen ersten Nadelpositionssensor umfasst und dazu konfiguriert ist, in den physischen Raum des Pads (13) eingeführt zu werden, wobei die Positionsverfolgungsvorrichtung (15) auch dazu konfiguriert ist, die Position und Ausrichtung der Nadel relativ zum Pad (13) durch die Lokalisierung des ersten Nadelpositionssensors zu verfolgen, wobei der erste Nadelpositionssensor in der Spitze der Nadel angeordnet ist, wobei die Nadel einen zweiten Nadelpositionssensor umfasst, der am Griff der Nadel oder in der Nähe davon angeordnet ist, wobei die Positionsverfolgungsvorrichtung (15) dazu konfiguriert ist, die Position und Ausrichtung des Griffs der Nadel relativ zum Pad (13) durch die Lokalisierung des zweiten Nadelpositionssensors zu verfolgen,
wobei das Verfahren während des Trainings Folgendes umfasst:
- das Empfangen von mindesten einem Steuer- oder Datensignal von dem Padidentifikationselement, um die Art des Pads (13) zu identifizieren, das in dem Simulationssystem enthalten ist;
- das Erzeugen von einem virtuellen Raum, der dem physischen Raum entspricht, der von dem Pad eingenommen wird;
- das Erzeugen von mindestens einem virtuellen organischen Gewebe an einer beliebigen Position innerhalb des virtuellen Raums, der dem physischen Raum entspricht, der von dem Polster (13) eingenommen wird;
- für jede Bewegung des bildgebenden Scannersimulators (14), das Empfangen seiner Position und Ausrichtung, wobei die Position und Ausrichtung durch die Verfolgungsvorrichtung (15) ausgehend von der Position des ersten Positionssensors erhalten wird, wenn er sich über oder in der Nähe des Pads (13) befindet;
- für jede Bewegung der Nadel, das Empfangen ihrer Position und Ausrichtung, wobei die Position und Ausrichtung durch die Verfolgungsvorrichtung (15) ausgehend von der Position des ersten Nadelpositionssensors und des zweiten Nadelpositionssensors erhalten wird, wenn die Nadel in oder über den physischen Raum des Pads (13) eingeführt wird;
- für jede empfangene Position und Ausrichtung der Nadel, das Bestimmen, wie stark die Nadel während ihres Einführens in den physischen Raum verformt wird, und das Erzeugen einer virtuellen Nadel innerhalb des virtuellen Raums in einer Position und Ausrichtung gemäß der empfangenen Position und Ausrichtung der Nadel;
- das Erhalten einer virtuellen Schnittebene im virtuellen Raum des Pads (13) für jede empfangene Position und Ausrichtung des bildgebenden Scannersimulators (14);
- das Erzeugen eines simulierten Bildes aus der erhaltenen virtuellen Schnittebene, welches einen Abschnitt von mindestens einem der erzeugten virtuellen organischen Geweben umfasst, wenn die erhaltene virtuelle Schnittebene das virtuelle organische Gewebe in dem virtuellen Raum schneidet, und einen Abschnitt der virtuellen Nadel, wenn die erhaltene virtuelle Schnittebene die virtuelle Nadel in dem virtuellen Raum schneidet;
- das Anzeigen des erzeugten Bildes auf dem Bildschirm (12).

2. Das Verfahren nach Anspruch 1, wobei der bildgebende Scannersimulator (14) ein erstes Identifikationselement umfasst, das dazu konfiguriert ist, die Art des in dem Simulationssystem enthaltenen bildgebenden Scannersimulators (14) zu identifizieren, wobei das Verfahren Folgendes umfasst:
- das Empfangen von mindestens einem Steuer- oder Datensignal von dem ersten Identifikationselement, um die Art des bildgebenden Scannersimulators (14) zu identifizieren, der in dem Simulationssystem enthalten ist.

3. Das Verfahren nach einem der Ansprüche 1 bis 2, wobei das Pad (13) mindestens einen zweiten Positionssensor umfasst, wobei die Positionsverfolgungsvorrichtung (15) auch dazu konfiguriert ist, die Position und Ausrichtung des Pads (13) durch Lokalisieren des zweiten Positionssensors zu verfolgen, wobei das Verfahren weiterhin Folgendes umfasst:
- für jede Bewegung des Pads (13), das Empfangen seiner Position und Ausrichtung, wobei die Position und Ausrichtung durch die Verfolgungsvorrichtung (15) ausgehend von der Position des zweiten Positionssensors erhalten wird;
- das Erhalten einer virtuellen Schnittebene in dem virtuellen Raum des Pads (13) für jede empfangene Position und Ausrichtung des Pads (13) und die empfangene Position und Ausrichtung des bildgebenden Scannersimulators (14) gemäß der Bewegung des Pads (13);
- das Erzeugen eines simulierten Bildes aus der erhaltenen virtuellen Schnittebene, welches einen Abschnitt von mindestens einem der erzeugten virtuellen organischen Gewebe umfasst, wenn die erhaltene virtuelle Schnittebene das virtuelle organische Gewebe in dem virtuellen Raum schneidet;
- das Anzeigen des erzeugten Bildes auf dem Bildschirm (12).

4. Das Verfahren nach Anspruch 3, weiterhin umfassend, für jede empfangene Position und Ausrichtung des Pads (13):
- das Bestimmen der Bewegung des erzeugten mindestens einen virtuellen organischen Gewebes in dem virtuellen Raum.

5. Das Verfahren nach Anspruch 1, wobei die Nadel ein erstes Element umfasst, das durch einen Benutzer betätigt werden kann, das dazu konfiguriert ist, ein Steuer- oder Datensignal zu erzeugen, das während des Trainings zu berücksichtigen ist, wobei das Verfahren Folgendes umfasst:
- das Empfangen von mindestens einem Steuer- oder Datensignals, das von dem ersten betätigbaren Element erzeugt worden ist, das in der Nadel enthalten ist, wenn sie von einem Benutzer betätigt wird.

6. Das Verfahren nach einem der Ansprüche 1 oder 5, wobei die Nadel ein Nadelidentifizierungselement umfasst, das dazu konfiguriert ist, die Art der in dem Simulationssystem enthaltenen Nadel zu identifizieren, wobei das Verfahren Folgendes umfasst:
- das Empfangen von mindestens einem Steuer- oder Datensignal von dem Nadelidentifizierungselement, um die Art der in dem Simulationssystem enthaltenen Nadel zu identifizieren.

7. Das Verfahren nach einem der Ansprüche 1 bis 6, weiterhin umfassend:
- das Anwenden von einer Atembewegung während des Erzeugens des simulierten Bildes aus der erhaltenen virtuellen Schnittebene.

8. Das Verfahren nach einem der Abschnitte 1 bis 7, wobei ein virtuelles organisches Gewebe ausgewählt ist aus:
- einem virtuellen anormalen Element, das eine medizinische Anomalie darstellt;
- einem virtuellen Modell eines Organs.

9. Ein Steuersystem zum Trainieren von bildgebungsgeführten Eingriffen, wobei das Steuersystem mindestens einen Bildschirm (12) assoziiert hat und mit einem Simulationssystem verbunden werden kann, wobei das Simulationssystem Folgendes umfasst:
- ein Pad (13), wobei das Pad (13) eine homogene Matrix mit einer dreidimensionalen Form ist und das Pad (13) mit einer lichtundurchlässigen Membran bedeckt ist, wobei das Pad (13) ein Padidentifikationselement umfasst, das dazu konfiguriert ist, die Art des Pads, das in dem Simulationssystem enthalten ist, zu identifizieren, wobei das Verfahren Folgendes umfasst;
- einen bildgebenden Scannersimulator (14), der einen ersten Positionssensor umfasst und dazu konfiguriert ist, über das Pad (13) bewegt zu werden, wobei der bildgebende Scannersimulator dazu konfiguriert ist, einen realen Ultraschallwandler zu simulieren;
- eine Positionsverfolgungsvorrichtung (15), die dazu konfiguriert ist, die Position und Ausrichtung des bildgebenden Scannersimulators (14) relativ zu dem Pad (13) durch Lokalisieren des ersten Positionssensors zu verfolgen;
- eine Nadel, die einen ersten Nadelpositionssensor umfasst und dazu konfiguriert ist, in den physischen Raum des Pads (13) eingeführt zu werden, wobei die Positionsverfolgungsvorrichtung (15) auch dazu konfiguriert ist, die Position und Ausrichtung der Nadel relativ zum Pad (13) durch Lokalisieren des ersten Nadelpositionssensors zu verfolgen, wobei der erste Nadelpositionssensor in der Spitze der Nadel angeordnet ist, wobei die Nadel einen zweiten Nadelpositionssensor umfasst, der am Griff der Nadel oder in der Nähe davon angeordnet ist, wobei die Positionsverfolgungsvorrichtung (15) auch dazu konfiguriert ist, die Position und Ausrichtung des anderen Endes der Nadel relativ zum Pad (13) durch Lokalisieren des zweiten Nadelpositionssensors zu verfolgen,
wobei das Steuersystem Folgendes umfasst:
- ein Mittel zum Empfangen von mindestens einem Steuer- oder Datensignal von dem Padidentifikationselement, um die Art des Pads (13) zu identifizieren, das in dem Simulationssystem enthalten ist;
- ein Mittel zum Erzeugen eines virtuellen Raums, der dem physischen Raum entspricht, der von dem Pad eingenommen wird;
- ein Mittel zum Erzeugen von mindestens einem virtuellen organischen Gewebe an einer beliebigen Position innerhalb des virtuellen Raums, der dem physischen Raum entspricht, der von dem Pad (13) eingenommen wird;
- für jede Bewegung des bildgebenden Scannersimulators (14), ein Mittel zum Empfangen seiner Position und Ausrichtung, wobei die Position und Ausrichtung durch die Verfolgungsvorrichtung (15) ausgehend von der Position des ersten Positionssensors erhalten wird, wenn er sich über oder in der Nähe des Pads (13) befindet;
- für jede Bewegung der Nadel, ein Mittel zum Empfangen ihrer Position und Ausrichtung, wobei die Position und Ausrichtung durch die Verfolgungsvorrichtung (15) ausgehend von der Position des ersten Nadelpositionssensors und des zweiten Nadelpositionssensors erhalten wird, wenn die Nadel in oder über den physischen Raum des Pads (13) eingeführt wird;
- für jede empfangene Position und Ausrichtung der Nadel, ein Mittel zum Bestimmen, wie stark die Nadel während ihres Einführens in den physischen Raum verformt wird, und Erzeugen einer virtuellen Nadel innerhalb des virtuellen Raums in einer Position und Ausrichtung gemäß der empfangenen Position und Ausrichtung der Nadel;
- für jede empfangene Position und Ausrichtung des bildgebenden Scannersimulators (14), ein Mittel zum Erlangen einer virtuellen Schnittebene im virtuellen Raum des Pads (13);
- ein Mittel zum Erzeugen eines simulierten Bildes ausgehend von der erhaltenen virtuellen Schnittebene, welches einen Abschnitt von mindestens einem der erzeugten virtuellen organischen Geweben umfasst, wenn die erhaltene virtuelle Schnittebene das virtuelle organische Gewebe in dem virtuellen Raum schneidet, und einen Abschnitt der virtuellen Nadel umfasst, wenn die erhaltene virtuelle Schnittebene die virtuelle Nadel in dem virtuellen Raum schneidet;
- ein Mittel zur Anzeige des erzeugten Bildes auf dem Bildschirm (12).

## Revendications

1. Un procédé de formation d'interventions guidées par imagerie au moyen d'un système de commande (10) ayant associé au moins un écran (12) et pouvant être connecté à un système de simulation (11), le système de simulation (11) comprenant :
- un pavé (13), dans lequel le pavé (13) est une matrice homogène avec une forme tridimensionnelle et le pavé (13) est recouvert d'une membrane opaque, dans lequel le pavé (13) comprend un élément d'identification de pavé configuré pour identifier le type de pavé compris dans le système de simulation ;
- un simulateur de scanner d'imagerie (14) comprenant un premier capteur de position et étant configuré pour être déplacé sur le pavé (13), dans lequel le simulateur de scanner d'imagerie est configuré pour simuler un transducteur d'ultrasons réel ;
- un dispositif de suivi de position (15) configuré pour suivre la position et l'orientation du simulateur de scanner d'imagerie (14) par rapport au pavé (13) en localisant le premier capteur de position ;
- une aiguille comprenant un premier capteur de position d'aiguille et étant configurée pour être insérée dans l'espace physique du pavé (13), dans lequel le dispositif de suivi de position (15) est également configuré pour suivre la position et l'orientation de l'aiguille par rapport au pavé (13) en positionnant le premier capteur de position d'aiguille, dans lequel le premier capteur de position d'aiguille est disposé dans la pointe de l'aiguille, dans lequel l'aiguille comprend un second capteur de position d'aiguille disposé au niveau de la poignée de l'aiguille ou à proximité de celle-ci, dans lequel le dispositif de suivi de position (15) est configuré pour suivre la position et l'orientation de la poignée de l'aiguille par rapport au pavé (13) en positionnant le second capteur de position d'aiguille,
le procédé comprenant, lors de la formation :
- recevoir au moins un signal de commande ou de données de l'élément d'identification de pavé pour identifier le type de pavé (13) compris dans le système de simulation ;
- générer un espace virtuel correspondant à l'espace physique occupé par le pavé;
- générer au moins un tissu organique virtuel dans une position quelconque à l'intérieur de l'espace virtuel correspondant à l'espace physique occupé par le pavé (13) ;
- pour chaque mouvement du simulateur de scanner d'imagerie (14), recevoir sa position et son orientation, ladite position et orientation étant obtenues par le dispositif de suivi (15) à partir de l'emplacement du premier capteur de position lorsqu'il est au-dessus ou à proximité du pavé (13) ;
- pour chaque mouvement de l'aiguille, recevoir sa position et son orientation, ladite position et orientation étant obtenues par le dispositif de suivi (15) à partir de l'emplacement du premier capteur de position d'aiguille et du second capteur de position d'aiguille lorsque l'aiguille est insérée dans ou sur l'espace physique du pavé (13) ;
- pour chaque position et orientation reçues de l'aiguille, déterminer combien l'aiguille est déformée lors de son insertion dans l'espace physique et générer une aiguille virtuelle à l'intérieur de l'espace virtuel dans une position et une orientation en fonction de ladite position et orientation reçues de l'aiguille ;
- pour chaque position et orientation reçues du simulateur de scanner d'imagerie (14), obtenir un plan de coupe virtuel dans l'espace virtuel du pavé (13) ;
- générer une image simulée à partir du plan de coupe virtuel obtenu, qui comprend une section d'au moins un des tissus organiques virtuels générés si le plan de coupe virtuel obtenu coupe le tissu organique virtuel dans l'espace virtuel et une section de l'aiguille virtuelle si le plan de coupe virtuel obtenu coupe l'aiguille virtuelle dans l'espace virtuel ;
- afficher l'image générée sur l'écran (12).

2. Le procédé selon la revendication 1, dans lequel le simulateur de scanner d'imagerie (14) comprend un premier élément d'identification configuré pour identifier le type de simulateur de scanner d'imagerie (14) compris dans le système de simulation, le procédé comprenant :
- recevoir au moins un signal de commande ou de données du premier élément d'identification pour identifier le type de simulateur de scanner d'imagerie (14) compris dans le système de simulation.

3. Le procédé selon l'une quelconque des revendications 1 à 2, dans lequel le pavé (13) comprend au moins un second capteur de position, dans lequel le dispositif de suivi de position (15) est également configuré pour suivre la position et l'orientation du pavé (13) en localisant le second capteur de position, le procédé comprenant en outre :
- pour chaque mouvement du pavé (13), recevoir sa position et son orientation, ladite position et orientation étant obtenues par le dispositif de suivi (15) à partir de l'emplacement du second capteur de position ;
- pour chaque position et orientation reçues du pavé (13) et la position et l'orientation reçues du simulateur de scanner d'imagerie (14), obtenir un plan de coupe virtuel dans l'espace virtuel du pavé (13) en fonction du mouvement du pavé (13) ;
- générer une image simulée à partir du plan de coupe virtuel obtenu, qui comprend une section d'au moins l'un des tissus organiques virtuels générés si le plan de coupe virtuel obtenu coupe le tissu organique virtuel dans l'espace virtuel ;
- afficher l'image générée sur l'écran (12).

4. Le procédé selon la revendication 3, comprenant en outre, pour chaque position et orientation reçues du pavé (13) :
- déterminer le mouvement dans l'espace virtuel de l'au moins un tissu organique virtuel généré.

5. Le procédé selon la revendication 1, dans lequel l'aiguille comprend un premier élément actionnable par un utilisateur configuré pour générer un signal de commande ou de données à considérer lors de la formation, le procédé comprenant :
- recevoir au moins un signal de commande ou de données généré par le premier élément actionnable compris dans l'aiguille lorsqu'il est actionné par un utilisateur.

6. Le procédé selon l'une quelconque des revendications 1 à 5, dans lequel l'aiguille comprend un élément d'identification d'aiguille configuré pour identifier le type d'aiguille compris dans le système de simulation, le procédé comprenant :
- recevoir au moins un signal de commande ou de données de l'élément d'identification d'aiguille pour identifier le type d'aiguille compris dans le système de simulation.

7. Le procédé selon l'une quelconque des revendications 1 à 6, comprenant en outre :
- appliquer un mouvement de respiration pendant la génération de l'image simulée à partir du plan de coupe virtuel obtenu.

8. Le procédé selon l'une quelconque des clauses 1 à 7, dans lequel un tissu organique virtuel est choisi parmi :
- un élément anormal virtuel représentant une anomalie médicale ;
- un modèle virtuel d'un organe.

9. Un système de commande pour former des interventions guidées par imagerie, le système de commande ayant associé au moins un écran (12) et pouvant être connecté à un système de simulation, le système de simulation comprenant :
- un pavé (13), dans lequel le pavé (13) est une matrice homogène avec une forme tridimensionnelle et le pavé (13) est recouvert d'une membrane opaque, dans lequel le pavé (13) comprend un élément d'identification de pavé configuré pour identifier le type de pavé compris dans le système de simulation, le procédé comprenant :
- un simulateur de scanner d'imagerie (14) comprenant un premier capteur de position et étant configuré pour être déplacé sur le pavé (13), dans lequel le simulateur de scanner d'imagerie est configuré pour simuler un transducteur d'ultrasons réel ;
- un dispositif de suivi de position (15) configuré pour suivre la position et l'orientation du simulateur de scanner d'imagerie (14) par rapport au pavé (13) en localisant le premier capteur de position ;
- une aiguille comprenant un premier capteur de position d'aiguille et étant configurée pour être insérée dans l'espace physique du pavé (13), dans lequel le dispositif de suivi de position (15) est également configuré pour suivre la position et l'orientation de l'aiguille par rapport au pavé (13) en positionnant le premier capteur de position d'aiguille, dans lequel le premier capteur de position d'aiguille est disposé dans la pointe de l'aiguille, dans lequel l'aiguille comprend un second capteur de position d'aiguille disposé au niveau de la poignée de l'aiguille ou à proximité de celle-ci, dans lequel le dispositif de suivi de position (15) est également configuré pour suivre la position et l'orientation de l'autre extrémité de l'aiguille par rapport au pavé (13) en positionnant le second capteur de position d'aiguille,
le système de commande comprenant :
- un moyen pour recevoir au moins un signal de commande ou de données de l'élément d'identification de pavé pour identifier le type de pavé (13) compris dans le système de simulation ;
- un moyen pour générer un espace virtuel correspondent à l'espace physique occupé par le pavé ;
- un moyen pour générer au moins un tissu organique virtuel dans n'importe quelle position à l'intérieur de l'espace virtuel correspondant à l'espace physique occupé par le pavé (13) ;
- pour chaque mouvement du simulateur de scanner d'imagerie (14), un moyen pour recevoir sa position et son orientation, ladite position et ladite orientation étant obtenues par le dispositif de suivi (15) à partir de l'emplacement du premier capteur de position lorsqu'il est au-dessus ou à proximité du pavé (13) ;
- pour chaque mouvement de l'aiguille, un moyen pour recevoir sa position et son orientation, ladite position et ladite orientation étant obtenues par le dispositif de suivi (15) à partir de l'emplacement du premier capteur de position d'aiguille et du second capteur de position d'aiguille lorsque l'aiguille est insérée dans ou sur l'espace physique du pavé (13) ;
- pour chaque position et orientation reçues de l'aiguille, un moyen de détermination de la quantité de déformation de l'aiguille lors de son insertion dans l'espace physique et de génération d'une aiguille virtuelle au sein de l'espace virtuel dans une position et une orientation selon lesdites position et orientation reçues de l'aiguille ;
- pour chaque position et orientation reçues du simulateur de scanner d'imagerie (14), un moyen pour obtenir un plan de coupe virtuel dans l'espace virtuel du pavé (13) ;
- un moyen pour générer une image simulée à partir du plan de coupe virtuel obtenu, qui comprend une section d'au moins un des tissus organiques virtuels générés si le plan de coupe virtuel obtenu coupe le tissu organique virtuel dans l'espace virtuel et une section de l'aiguille virtuelle si le plan de coupe virtuel obtenu coupe l'aiguille virtuelle dans l'espace virtuel ;
- un moyen pour afficher l'image générée sur l'écran (12).
